# EUROPÄISCHE PATENTANMELDUNG

(11) **EP 4 424 496 A1**
(43) Veröffentlichungstag der Anmeldung: **04.09.2024**
(21) Anmeldenummer: 24160746.4
(22) Anmeldetag: 01.03.2024
(51) Int. Cl.: B29C 65/00, C09J 7/21, C09J 7/38, B65H 35/02

(54) **VERFAHREN ZUM KONFEKTIONIEREN VON TEXTILEN KLEBEBÄNDERN**

(30) Priorität: 03.03.2023 DE 102023105349
(71) Anmelder: TESA SE, 22848 Norderstedt (DE)
(72) Erfinder: BAUMANN, Matthias, 77749 Hohberg (DE); SCHMIDLIN, Andreas, 22848 Norderstedt (DE); GRONERT, Stefan, 77716 Haslach (DE); GERATHEWOHL, Yvonne, 77866 Rheinau (DE); AHREND, Angelika, 76185 Karlsruhe (DE)
(74) Vertreter: tesa SE

(57) **Zusammenfassung**

Die Erfindung betrifft ein Verfahren zum Konfektionieren von textilen Klebebändern, insbesondere Klebebändern zum Umwickeln von Kabeln, wobei aus einer Klebeband-Bahn umfassend ein textiles Material, das gewählt wird aus der Gruppe Gelege, Geflechte, Nadelflortextilien, Filze, Gewebe oder Vliese und auf das zumindest einseitig eine Klebebeschichtung, vorzugsweise Haftklebemasse aufgebracht ist, durch Schneiden in Abzugsrichtung der Bahn aus dieser mehrere streifenförmige Klebebänder mit jeweils zwei randseitigen Schnittkanten erzeugt werden, wobei zumindest eine der Schnittkante der Klebebänder nach dem Schneiden mittels eines Versiegelungswerkzeug thermisch so weit erhitzt werden, dass die das Textil bildenden Fasern und/oder Filamente zumindest partiell aufgeschmolzen wird, so dass sich Verknüpfungspunkte zwischen den Fasern und/oder Filamenten ausbilden, wobei das zur Bildung der Fasern und/oder Filamente eingesetzte Material zu mindestens 50 Gew.-% aus Polyester, vorzugsweise Polyethylenterephthalat, aus Polyamid, aus Polyolefin, aus Polyphthalamid oder aus PVC besteht.

## Beschreibung

Die Erfindung beschreibt ein Verfahren zum Konfektionieren von textilen Klebebändern, insbesondere Klebebändern zum Umwickeln von Kabeln, wobei aus einer Klebeband-Bahn umfassend ein textiles Material, auf das zumindest einseitig eine Klebebeschichtung, vorzugsweise Haftklebemasse aufgebracht ist, durch Schneiden in Abzugsrichtung der Klebeband-Bahn aus dieser mehrere streifenförmige Klebebänder mit jeweils zwei randseitigen Schnittkanten erzeugt werden. Die nach diesem Verfahren erzeugten Klebebänder sind insbesondere zum Ummanteln von langgestrecktem Gut wie insbesondere Kabelsätzen in Automobilen geeignet.

Seit geraumer Zeit werden in der Industrie Klebebänder zur Herstellung von Kabelbäumen verwendet. Die Klebebänder werden zum Bündeln einer Vielzahl von elektrischen Leitungen vor dem Einbau oder in bereits montiertem Zustand eingesetzt, um beispielsweise den Raumbedarf des Leitungsbündels durch Bandagieren zu reduzieren und zusätzlich Schutzfunktionen wie Schutz gegen mechanische und/oder thermische Beanspruchung zu erreichen.

Gängige Formen von Klebebändern umfassen Folien- oder Textilträger, die in der Regel einseitig mit Haftklebemassen beschichtet sind. Klebebänder zum Ummanteln von langgestreckten Gütern sind beispielsweise aus der EP 1 848 006 A2, der DE 10 2013 213 726 A1 und der EP 2 497 805 A1 bekannt.

Die Herstellung derartiger Klebebänder beginnt im Allgemeinen damit, dass in einer entsprechenden Beschichtungsanlage eine Trägerbahn, beispielsweise eine textile Trägerbahn, ein- oder beidseitig mit einer zumeist selbstklebenden Beschichtung ausgerüstet wird.

Um bei doppelseitig klebenden Klebebändern zu verhindern, dass die Haftklebemassen miteinander in Kontakt kommen oder um bei einseitig klebenden Klebebändern eine Verklebung der Haftklebemasse auf dem Träger zu verhindern, werden die Klebebänder vor dem Wickeln auf ein Abdeckmaterial (auch als Trennmaterial bezeichnet) aufgebracht, das zusammen mit dem Klebeband aufgewickelt wird. Dem Fachmann sind derartige Abdeckmaterialien unter den Namen Releaseliner oder Liner bekannt.

Ein Liner (Trennpapier, Trennfolie) ist nicht Bestandteil eines Klebebandes, sondern nur ein Hilfsmittel zu dessen Herstellung, Lagerung oder für die Weiterverarbeitung durch Stanzen. Darüber hinaus ist ein Liner im Gegensatz zu einem Klebebandträger nicht fest mit einer Klebstoffschicht verbunden.

Nach eventuellen weiteren Verarbeitungsschritten wie zum Beispiel Trocknen wird das mit Klebemasse ausgerüstete Trägermaterial, Klebebandbahn genannt, samt Liner zu einer so genannten Jumborolle oder Mutterrolle in Form einer archimedischen Spirale aufgewickelt.

Zum Konfektionieren der Klebebänder wird diese Mutterrolle wieder abgewickelt, wobei aus der Mutterrolle durch Schneiden in Abzugsrichtung der Mutterrolle mehrere streifenförmige Klebebänder in der gewünschten Breite erzeugt werden, die ihrerseits wieder üblicherweise auf Kerne aus beispielsweise Pappe oder Kunststoff zu einzelnen Klebebandrollen ebenfalls in Form einer archimedischen Spirale aufgewickelt werden.

Die dabei entstehenden, im Vergleich zur Breite der Mutterrolle schmalen, Klebebandrollen werden als Tellerrollen bezeichnet.

Das Schneiden kann auch direkt nach der Fertigung erfolgen, also ohne dass die Klebebandbahn samt Liner auf- und wieder abgewickelt wird.

Daneben werden Klebebänder dadurch hergestellt, dass aus einer Jumbo- oder Mutterrolle direkt Klebebandrollen abgestochen werden.

Weiterhin ist es möglich, dass die Klebebandbahn ohne Liner geschnitten wird und der Liner nach dem Schnittvorgang in der entsprechenden Breite auf die offene Klebemassenseite aufgebracht wird. Standardbreiten für diese Tellerrollen sind 9, 19, 25, 38 oder 50 mm bei einer Standardlänge (Lauflänge) von 10, 15, 25 oder 50 m.

Zum Schneiden der Klebebandrollen sind unterschiedliche Schneidverfahren bekannt, das Rollenschneiden mit Rasierklingenschnitt, wobei ein feststehendes Messer verwendet wird, das Rollenschneiden mit einem Quetschmesser (Rundmesser) auf einer hierzu vorhandenen Gegenwelle, das Rollenschneiden mit einem Zickzack-Schnitt und das Schneiden im Scherenschnitt (S-Schnitt) mit zwei gegenläufigen aneinander liegenden Rundmessern.

Alle diese Konfektionierungsverfahren haben den Nachteil, dass es bei textilen Trägermaterialien wie Geweben oder Vliesen zu Ausfransungen, Fadenbildung und Fusselbildung an den jeweiligen Bandrändern kommen kann. Dies ist in der Praxis sehr unerwünscht, weil die Kabelsätze, die mit einem derartigen Klebeband umwickelt sind, optisch nicht gut aussehen und der Verarbeitungsprozess beim Kabelsatzkonfektionär gestört wird.

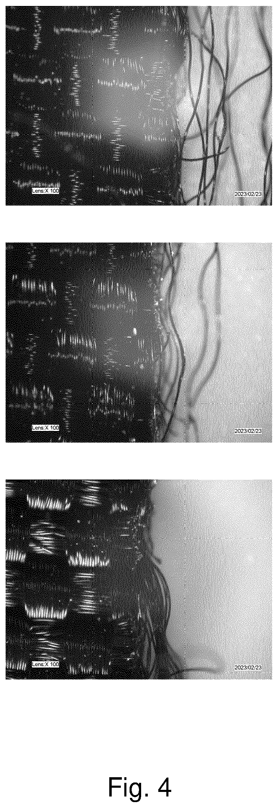

In der Figur 4 sind mikroskopisch vergrößerte Aufnahmen der Seitenkante eines Gewebeklebebandes gezeigt, das im Rasierklingenschnitt geschnitten worden ist. Die Kett- und Schussfäden des Gewebes setzen sich aus einzelnen Filamenten zusammen.

Nach dem Schneiden der Klebebänder aus der Klebeband-Bahn kommt durch das Verletzen der Kett- und insbesondere der Schussfäden zu Ausfransungen der Filamente an der Schneidekante. Die Filamente stehen deutlich hervor, was eine optisch sehr unsaubere Schnittkante ergibt.

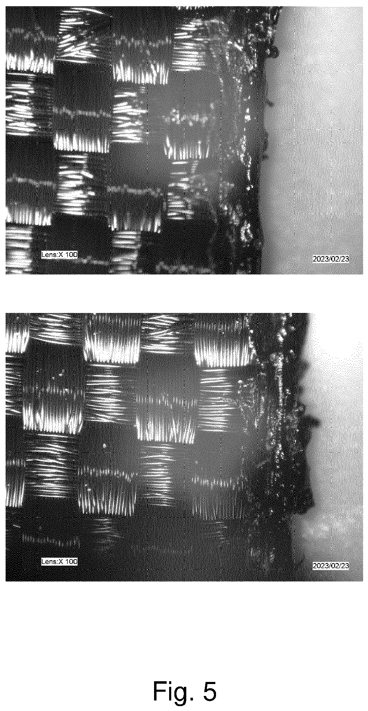

Die Figur 5 zeigt mikroskopisch vergrößerte Aufnahmen der Seitenkante des gleichen Gewebeklebebandes, das nach dem erfindungsgemäßen Verfahren versiegelt worden ist.

Es ist klar zu erkennen, dass alle Filamente miteinander verschmolzen sind, so dass keine Ausfransungen vorhanden sind.

Aus der WO 2016/128268 A1 ist darüber hinaus bekannt, das Schneiden mittels Ultraschall durchzuführen, wobei ein ultraschallerregtes Schneidwerkzeug verwendet wird. Das Ultraschall-Schneiden erfolgt unter Kühlung des Schneidbereichs und/oder unter Verwendung eines gekühlten Schneidwerkzeugs.

Das Ultraschall-Schneiden führt zu einer Verbesserung der Schneidkanten, weil die textilen Materialien an ihren Rändern teilweise versiegelt werden, so dass an den Schnittkanten weniger Ausfransungen und weniger Fusselbildung zu beobachten sind.

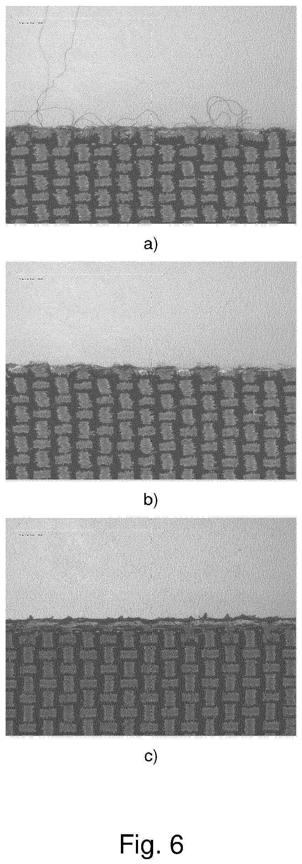

Die Figur 6 zeigt im direkten Vergleich das Gewebeklebeband, das nur geschnitten und nicht versiegelt worden ist (Figur 6a)), das mit dem Ultraschall-Schneiden nach der WO 2016/128268 A1 geschnitten worden ist (Figur 6b)) und das nach dem erfindungsgemäßen Verfahren versiegelt worden ist (Figur 6c)).

Die nach dem erfindungsgemäßen Verfahren versiegelte Schnittkante ist völlig fusselfrei, auch sind keine Ausfransungen vorhanden. Das ultraschallgeschnittene Gewebe zeigt hingegen (entgegen der in der WO 2016/128268 A1 diskutierten Ergebnisse) durchaus Fussel und wenige Ausfransungen.

Bei dem nur geschnittenen Gewebe sind massive Ausfransungen zu erkennen.

Weiterhin führt der Energieeintrag durch Ultraschall unvermeidbar zum Erweichen der Klebmasse und damit unerwünschterweise zu verschmutzen Schneidwerkzeugen und klebrigen Schneidkanten. Die WO 2016/128268 A1 schlägt als Gegenmaßnahme dazu eine zusätzliche Kühlung der Klebmasseschicht vor. Aus diesem Grund können in der Praxis - wie in der WO 2016/128268 A1 angegeben ist - mit diesem Ultraschall-Schneidverfahren nur geringe Bahngeschwindigkeiten von 25 m/min erreicht werden.

Aus der DE 10 2020 119 494 A1 ist ein Verfahren zur Herstellung eines Klebebandes, insbesondere eines Wickelbandes zur Bündelung von Kabeln in Automobilen bekannt, wonach zunächst ein

Trägerbandmaterial gegebenenfalls inklusive Klebebeschichtung von einer Abwickelrolle in Längsrichtung zugeführt und anschließend in Längsstreifen geschnitten wird, wonach ferner die Längsstreifen in zumindest zwei Längsstreifenbahnen aufgefächert werden, die voneinander überwiegend vertikal zur Längsrichtung beabstandet sind, und wonach die beiden Längsstreifenbahnen abschließend abgelängt sowie als Klebebandrolle auf jeweils zumindest einer zugehörigen Aufwickelrolle aufgewickelt werden. Als Schneideinrichtung beziehungsweise Längs-Schneideinrichtung wird ebenfalls eine Ultraschall-Schneideinrichtung erwähnt.

Der vorliegenden Erfindung liegt somit die Aufgabe zu Grunde, die vorstehenden Nachteile zu vermeiden und ein Verfahren bereitzustellen, mit dem Klebebänder mit einer glatten Schnittkante ohne Ausfransungen, Fadenbildung oder Fusselbildung hergestellt werden können.

Des Weiteren liegt der vorliegenden Erfindung die Aufgabe zu Grunde, ein Klebeband zur Verfügung zu stellen, das glatte Schnittkanten aufweist, so dass keine Fadenbildung oder Fusselbildung an den Kanten vorhanden ist.

Des Weiteren liegt der Erfindung die Aufgabe zu Grunde, die Produktionsgeschwindigkeit im maßgeblichen Sinne erhöhen zu können, um einen effizienteren Einsatz von Ressourcen zu gewährleisten.

Gelöst wird diese Aufgabe durch ein Verfahren, wie es im Hauptanspruch niedergelegt ist. Gegenstand der Unteransprüche sind dabei vorteilhafte Weiterbildungen der Erfindung. Weiterhin bezieht sich die Erfindung auf ein Klebeband, das nach dem erfindungsgemäßen Verfahren hergestellt ist, wobei dieses Klebeband einen streifenförmigen textilen Träger und vorzugsweise eine einseitige Klebebeschichtung umfasst sowie zwei randseitige Schnittkanten, bei denen das textile Trägermaterial verschmolzen ist, so dass dieses fussel- und fadenfrei ist. Des Weiteren liegen spezielle Verwendungen der erfindungsgemäß hergestellten Klebebänder im Rahmen des Erfindungsgedankens.

Demgemäß betrifft die Erfindung ein Verfahren zum Konfektionieren von textilen Klebebändern, insbesondere Klebebändern zum Umwickeln von Kabeln, wobei aus einer Klebeband-Bahn umfassend ein textiles Material, das gewählt wird aus der Gruppe Gelege, Geflechte, Nadelflortextilien, Filze, Gewebe oder Vliese und auf das zumindest einseitig eine Klebebeschichtung, vorzugsweise Haftklebemasse aufgebracht ist, durch Schneiden in Abzugsrichtung der Klebeband-Bahn aus dieser mehrere streifenförmige Klebebänder mit jeweils zwei randseitigen Schnittkanten erzeugt werden. Erfindungswesentlich ist, dass zumindest eine der Schnittkante der Klebebänder nach dem Schneiden mittels eines Versiegelungswerkzeug thermisch so weit erhitzt wird, dass die das Textil bildenden Fasern und/oder Filamente zumindest partiell aufgeschmolzen werden, so dass sich Verknüpfungspunkte zwischen den Fasern und/oder Filamenten ausbilden, wobei das zur Bildung der Fasern und/oder Filamente eingesetzte Material zu mindestens 50 Gew.-% aus Polyester wie PET oder PBT, vorzugsweise Polyethylenterephthalat, aus Polyamid wie nicht aromatisches Polyamid wie Polyamid 6, Polyamid 6.6, Polyamid 4.6, aus Polyolefin wie Polyethylen oder Polypropylen, aus Polyphthalamid oder aus PVC besteht.

Verknüpfungspunkte bilden sich zwischen zwei oder mehr Fasern und/oder Filamenten, wenn diese sich durch Erwärmen im Schmelzbereich des Polymers miteinander verbinden und verkleben. Nach dem anschließenden Erkalten sind diese Verknüpfungen in der Beweglichkeit eingeschränkt.

In der Folge kommt es durch diese Fixierung zu weniger Faserausrissen im Textilmaterial.

Vorzugsweise werden beide Schnittkanten der Klebebänder nach dem Schneiden mittels eines Versiegelungswerkzeug thermisch so weit erhitzt, dass die das Textil bildenden Fasern und/oder Filamente zumindest partiell aufgeschmolzen werden, so dass sich Verknüpfungspunkte zwischen den Fasern und/oder Filamenten ausbilden.

Gemäß einer bevorzugten Variante der Erfindung umfasst das Versiegelungswerkzeug eine insbesondere elektrisch erwärmbare Schiene, die in Kontakt mit einer der beiden Schnittkanten steht. Diese Schiene wird so gewählt, dass diese Schiene entsprechende thermische und mechanische Eigenschaften (Abriebfestigkeit) besitzt.

Als Material für die Schiene wird vorzugsweise Keramik (zum Beispiel Aluminiumnitrid), ein Verbundwerkstoff (zum Beispiel aus hochwärmeleitenden Kohlefasern), Eisen- oder Nichteisenmetall (zum Beispiel Stahl, Aluminium, Bronze, Kupfer) gewählt.

Weiter vorzugsweise umfasst das Versiegelungswerkzeug zwei erwärmbare Schienen, die in Kontakt mit beiden Schnittkanten stehen.

Nach dem Schneiden werden die Klebebänder vorzugsweise mit beiden Schnittkanten an den erwärmten, also heißen Schienen vorbeigeführt. Die Schienen weisen eine Temperatur auf, die oberhalb des Schmelzpunktes des die Fasern und/oder Filamente zu bildenden und zu schmelzenden Materials liegt. Vorzugsweise liegt diese Temperatur zwischen 250 °C bis 450 °C, vorzugsweise 350 °C bis 400 °C.

Die Geschwindigkeit, mit der die Klebebänder durch das Versiegelungswerkzeug durchgeführt werden, hängt auch von der Länge des Kontaktbereiches zwischen Schiene und Schnittkante ab. Als geeignet haben sich Geschwindigkeiten von 0,6 bis 1,7 m/s bei einer Länge des Kontaktbereiches von 6 bis 14 cm gezeigt. Optimal sind 350 °C bei einer Geschwindigkeit von 1,3 m/s und einem Kontaktbereich von 9 cm.

Durch den Kontakt während des Vorbeiführens der Schnittkanten an dem erhitzten Versiegelungswerkzeug wird das Trägermaterial über die eingetragene Energie aufgeschmolzen, so dass die einzelnen Fasern und/oder Filamente punktuell miteinander verschmelzen und versiegeln. Ein höherer Energieeintrag und das Vorbeigleiten am beheizbaren Element kann die Schneidkante auch vollflächig verschmelzen. Dabei werden nahezu alle Fasern und/oder Filamente, die das Heizelement berühren bis in den Schmelzbereich erwärmt. Die weichen Fasern und/oder Filamente gleiten mit der Bahngeschwindigkeit an den Heizelementen vorbei und es kann sich eine weitgehend einheitliche Polymerfläche bilden, wo die einzelnen Fasern und/oder Filament nur noch schwer in ihrer ursprünglichen Form zu erkennen sind.

Die Höhe des Energieeintrags auf das Trägermaterial hat einen maßgeblichen Einfluss auf die Versiegelungsqualität. Ein zu geringer Energieeintrag führt zu einer ungenügenden Versiegelung, während ein zu hoher Energieeintrag das Material zu stark thermisch verändert und hierdurch die Qualität negativ beeinflusst.

Der Energieeintrag wird maßgeblich durch folgende Faktoren beeinflusst:
1. Temperatur des das Versiegelungswerkzeugs
2. Kontaktlänge von Versiegelungswerkzeug und Materialbahn
3. Materialbahngeschwindigkeit
4. Geometrie des das Versiegelungswerkzeugs (zum Beispiel Quadrat, Vieleck/Polygon, Dreieck, Kreis, Trapez, Oval)
5. Verdrängen der Materialbahn durch das das Versiegelungswerkzeug

Das erfindungsgemäße Verfahren weist den sehr großen Vorteil auf, dass durch eine entsprechende Abstimmung der die Versiegelung beeinflussenden Faktoren ein gleichbleibender Energieeintrag auf die Schneidkanten sichergestellt werden kann.

Beispielsweise kann die Temperaturregelung des Versiegelungswerkzeugs so ausgeführt werden, dass ein möglichst gleichbleibender Energieeintrag während des Versiegelungsprozess sowie beim Stillstand der Materialbahn erzielt wird. Hierzu kann beispielsweise bei gleichbleibender Kontaktfläche zwischen Schnittkante und Versiegelungswerkzeug mit zunehmender Bahngeschwindigkeit die Temperatur des Versiegelungswerkzeugs erhöht werden. Umgekehrt kann beim Reduzieren der Bandgeschwindigkeit die Temperatur reduziert werden.

Des Weiteren kann, wenn die Temperatur des Versiegelungswerkzeugs möglichst konstant bleiben soll, für einen gleichbleibenden Energieeintrag während der Beschleunigung der Materialbahn die Kontaktfläche zwischen Schnittkante und Versiegelungswerkzeug vergrößert werden, sprich die Kontaktfläche zwischen Siegelwerkzeug und Materialbahn wird variabel an die aktuelle Materialbahngeschwindigkeit angepasst.

Hierzu kann das Versiegelungswerkzeug mittels einer Rotationsbewegung eingeschwenkt werden und oder linear verfahren werden, so dass sich die Kontaktfläche zwischen Schiene und Schnittkante vergrößert. Auch eine Kombination beider Bewegungsarten ist möglich.

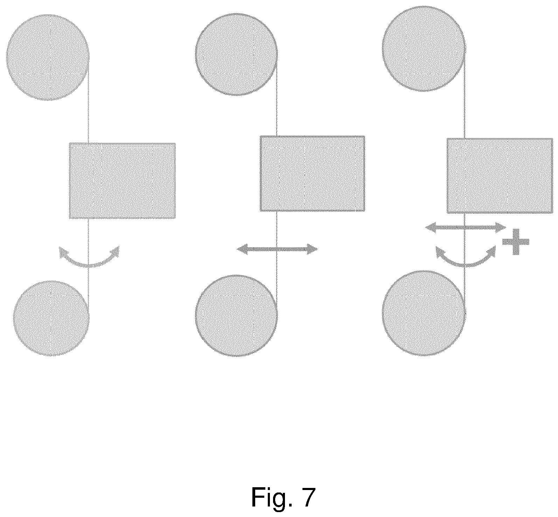

Die Figur 7 zeigt die unterschiedlichen relativen Bewegungsarten zwischen Materialbahn und Versiegelungswerkzeug.

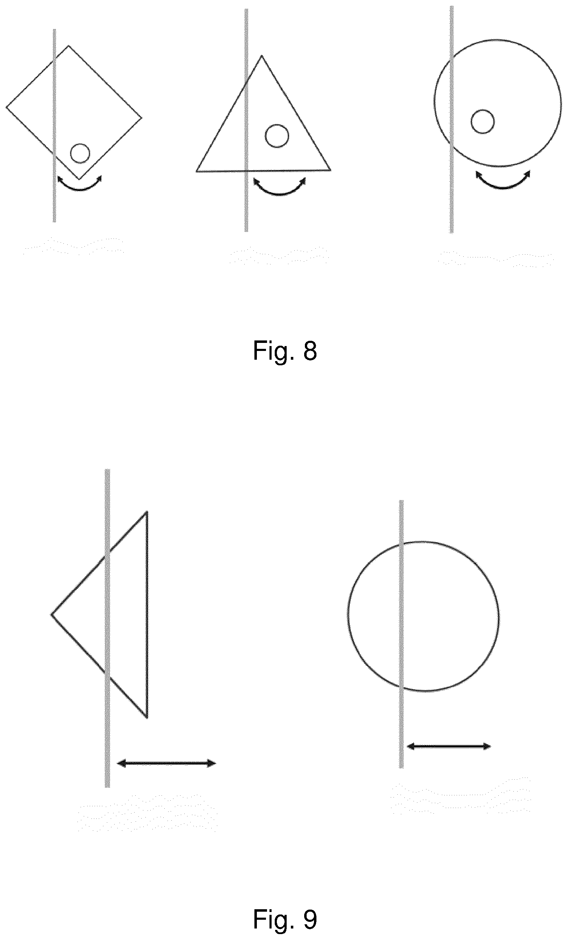

In der Figur 8 ist gezeigt, dass die Schienen eine unterschiedliche Geometrie aufweisen können, beispielsweise eine Rechteckform, eine Kreisform oder eine Dreiecksform. Werden die Schienen rotativ eingeschwenkt, ergibt sich je nach relativer Position der Schienen zu den Schnittkanten eine der Bahngeschwindigkeit angepasste Kontaktfläche.

Wenn sich die Fläche der Schiene je nach Stellung zur Materialbahn ändert, beispielsweise bei einer Kreisform oder bei einer Dreiecksform, reicht auch eine Linearbewegung, wie es in Figur 9 gezeigt ist, um eine der Bahngeschwindigkeit angepasste Kontaktfläche zu erzielen.

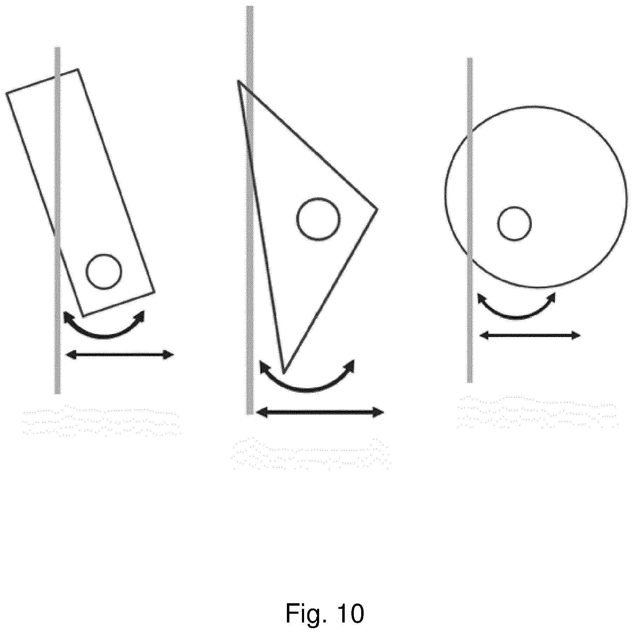

Figur 10 bildet die Kombination einer Linear- und einer Rotationsbewegung ab. Gut zu erkennen ist, dass je nach Gestaltung der Schiene eine sehr hohe Flexibilität bezüglich der Kontaktflächen zwischen Materialbahn und Schiene erreicht wird.

Die verschiedenen Bewegungsformen bringen unterschiedliche Vor- und Nachteile mit sich. Eine rotative Bewegung lässt sich einfach integrieren, hat aber einen höheren Platzbedarf im Bereich der Bahnführung. Zusätzlich steigt das Volumen des Versiegelungswerkzeuges. Eine Linearbewegung bietet umgekehrt der rotativ Bewegung einen geringeren Platzbedarf bei gesteigerter Komplexität für die Integration. Die Kombination aus beiden Bewegungsformen bringt höchste Komplexität für die Integration bei geringem Platzbedarf und kleinstem Volumen für das Versiegelungswerkzeug.

Insbesondere bei einer Geschwindigkeitsänderung der Materialbahn zum Beispiel beim Starten und Stoppen ändert sich die Kontaktzeit, in der die Materialbahn mit dem Siegelwerkzeug Kontakt hat, was zu einem veränderten Energieeintrag führt. In diesem Fall können die Temperatur des Versiegelungswerkzeuges und die Kontaktfläche durch eine Relativbewegung zwischen Versiegelungswerkzeug und Materialbahn so aufeinander abgestimmt werden, dass ein gleichbleibender Energieeintrag erfolgen kann.

Gemäß einer bevorzugten Ausführungsform der Erfindung weist das Versiegelungswerkzeug zwei parallel angeordnete Schienen auf, deren Abstand zueinander geringer als die Breite des Klebebandes ist, vorzugsweise beträgt die Differenz zwischen 1 bis 4 mm.

Beim Führen des Klebebandes durch die zwei Schienen wird aufgrund des Abstandes, der geringer ist als die Breite des Klebebands erreicht, dass das Klebeband in Form eines Bogens, ähnlich einer

Dachrinne gebogen wird. Aufgrund der Biegesteifigkeit des Trägermaterials werden die Kanten des Klebebands gleichzeitig mit gleichbleibendem Druck in beide Richtungen gegen die Schienen des Versiegelungswerkzeugs gepresst, so dass ein Energieübertrag von Schiene auf Schnittkante erfolgen kann.

Weiter vorzugsweise wird das Klebeband so durch das Versiegelungswerkzeug geführt, dass bei einseitig beschichteten Klebebändern der textile Träger den Außenbogen und die Klebemasse den Innenbogen bildet. Auf diese Weise ist gewährleistet, dass die Klebemasse keinen oder einen nur sehr geringen Kontakt zu den Schienen hat.

Bei dieser Anordnung der Schienen können die oben aufgeführten Faktoren im Hinblick auf einen möglichst konstanten Energieeintrag optimal aufeinander abgestimmt werden.

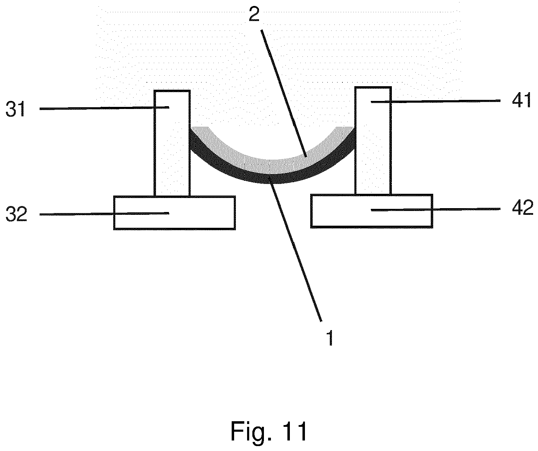

In Figur 11 ist das Versiegelungswerkzeug aus zwei Schienen 31, 41, dargestellt mit Blickrichtung in die Laufrichtung des Klebebands. Da der Abstand der beiden Schienen 31, 41 kleiner als die Breite des Klebebands ist, bildet das Klebeband beim Durchlaufen des Versiegelungswerkzeuges einen Bogen aus. In dem Bogen bildet die Klebemasseschicht 2 den Innenbogen, während der textile Träger 1 den Außenbogen bildet. Auf diese Weise berührt nur der textile Träger 1 die Schienen 31, 41.

Die Schienen 31, 41 weisen an ihrem Fuß jeweils eine sich in Richtung der anderen Schiene 31, 41 ersteckende Stütze 32, 42 auf.

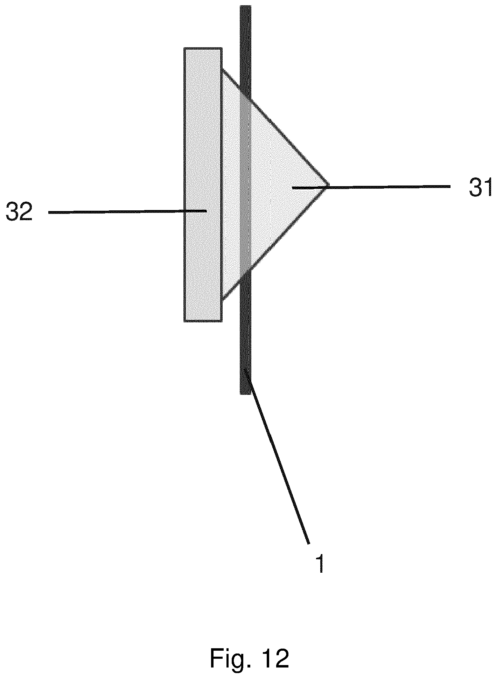

Die Figur 12 zeigt das Versiegelungswerkzeug aus zwei Schienen 31, 41 mit Blick auf die Schnittkante des Klebebands .

Gezeigt ist, dass die Schienen 31, 41 gemäß einer bevorzugten Ausführungsform der Erfindung eine dreieckige Grundfläche aufweisen.

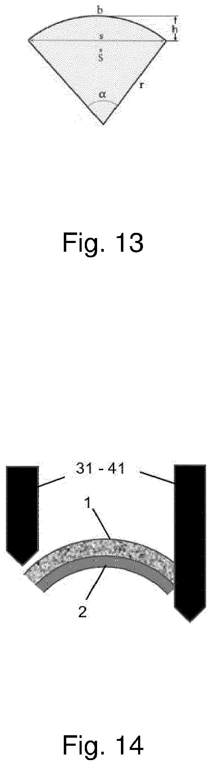

In der Figur 13 ist die mathematische Theorie hinter den erfindungsgemäßen Versiegelungswerkzeugen gezeigt.

Wenn die beiden Schienen in einem Abstand angeordnet sind, der geringer ist als die Breite des Klebebandes bildet sich ein Kreisbogen aus, wenn das Klebeband zwischen den Schienen durchgeführt wird.

Die Höhe h der Biegung wird umso größer und der Mittelpunktswinkel α wird umso kleiner, desto größer die Differenz zwischen Klebebandbreite und Abstand der Schienen ist.

Folgende Geometrien haben sich in der Praxis als geeignet gezeigt:
- b:: Breite des Klebebands (Länge des Kreisbogens b)
- s:: Abstand der beiden Schienen (Länge der Sehne s)
- h:: Höhe der Biegung (Höhe des Kreissegmentes h)
- α:: Mittelpunktswinkel

| b | s | h | α |
|---|---|---|---|
| mm | mm | mm | Grad |
| 15 | 14 | 2,32 | 73,25 |
| 15 | 13 | 3,19 | 104,66 |
| 15 | 12 | 3,81 | 129,61 |

| b | s | h | α |
|---|---|---|---|
| mm | mm | mm | Grad |
| 19 | 18 | 2,62 | 64,90 |
| 19 | 17 | 3,63 | 92,58 |
| 19 | 16 | 4,36 | 114,37 |

| b | s | h | α |
|---|---|---|---|
| mm | mm | mm | Grad |
| 25 | 24 | 3,02 | 56,47 |
| 25 | 23 | 4,21 | 80,36 |
| 25 | 22 | 5,08 | 99,08 |

Die Figur 14 zeigt das das Versiegelungswerkzeug aus zwei Schienen 31, 41, dargestellt mit Blickrichtung in die Laufrichtung des Klebebands. Die geschnittene Klebebandbreite b wird zwischen den Schienen auf die Strecke s verkürzt, es entsteht eine Biegung mit dem Sektorenwinkel α. Nach dem Passieren der Schienen ist der textile Träger 1 des Klebebands an beiden Schneidkanten im Winkel α/2 gefast.

Im Unterschied zu Figur 11 und der einfachen Vergleichbarkeit halber erstreckt sich der Bogen des Klebebands nach oben.

Für eine gleichbleibende Qualität der Versiegelungskante ist es notwendig, die Kanten des Klebebandes möglichst über die gesamte Länge des Versiegelungswerkzeuges an diesem entlangzuführen. Ein Verdrehen würde zu einer schlechteren Versiegelung führen, weil die Kanten eine veränderte Kontaktzeit zum Versiegelungswerkzeug haben.

Je nach Anzahl der aus der Klebebandbahn geschnittenen Klebebänder ist eine entsprechende Anzahl von Schienen vorhanden, die insbesondere in einer einzigen Vorrichtung nebeneinander angeordnet sind. Für die Anzahl der Schienen gilt, dass die Anzahl der Schiene idealerweise um eins größer ist als die Anzahl der Klebebänder, damit alle Schnittkanten versiegelt werden.

Bei dieser Variante erhitzen die mittig liegenden Schienen jeweils zwei Schnittkanten, wobei diese Schnittkanten zu zwei nebeneinander geführten Klebebändern gehören.

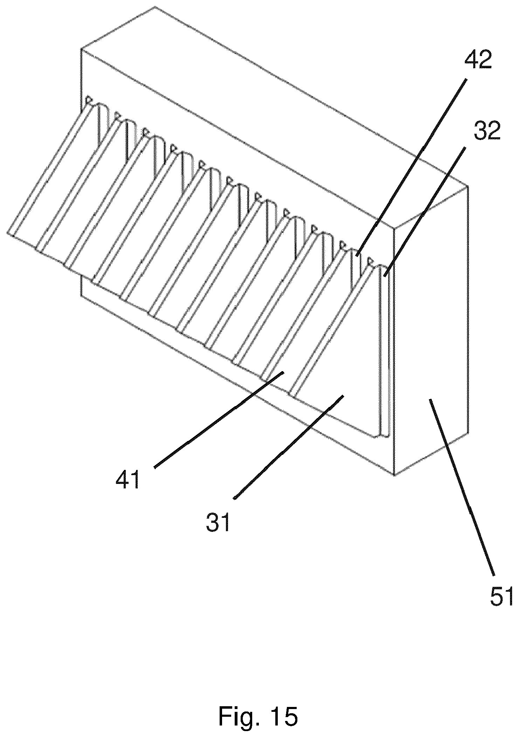

In der Figur 15 ist eine besonders vorteilhafte Variante des Versiegelungswerkzeuges gezeigt. Das Versiegelungswerkzeugt besteht aus vielen einzelnen Schienen 31, 41, die dieselbe dreieckige Form aufweisen und die kammartig nebeneinander mit konstanten Abständen angeordnet sind. Die Schienen 31, 41 sind mit ihren Stützen 32, 42 auf einer metallischen Halterung 51 fixiert, die ihrerseits linear und/oder rotativ in die Ebene der Klebebänder bewegt werden kann.

Diese Halterung 51 kann erhitzt werden und gibt die Wärme an die einzelnen Schienen 31, 41 weiter. In einer Variante der Erfindung ist die Halterung 51 fixiert, allerdings kann die Führung der einzelnen Bahn so verändert werden, dass diese in beliebiger Tiefe des Versiegelungswerkzeuges eintauchen können. Wenn gewünscht sind somit auch problemlos unterschiedliche Längen der Kontaktflächen der Klebebänder innerhalb des Versiegelungswerkzeuges einstellbar. In einer weiteren Variante ist sowohl die Führung der Bahn als auch das Versiegelungswerkzeug veränderbar gelagert.

Aufgrund der geschilderten Vorteile des Verfahrens sind Bahngeschwindigkeiten von 40 bis zu 120 m/min möglich, also Geschwindigkeiten, die deutlich über der Geschwindigkeit liegen, die in der WO 2016/128268 A1 erwähnt ist.

Weiterhin bezieht sich die Erfindung auf ein Klebeband, insbesondere Kabelwickelband, das insbesondere hergestellt ist nach dem erfindungsgemäßen Verfahren, wobei dieses Klebeband einen streifenförmigen textilen Träger und eine einseitige Klebebeschichtung umfasst sowie zwei randseitige Schnittkanten. Hierbei sind erfindungsgemäß die Schnittkanten verschmolzen sowie fussel- und fadenfrei bei der Abrollung der Klebebandrollen.

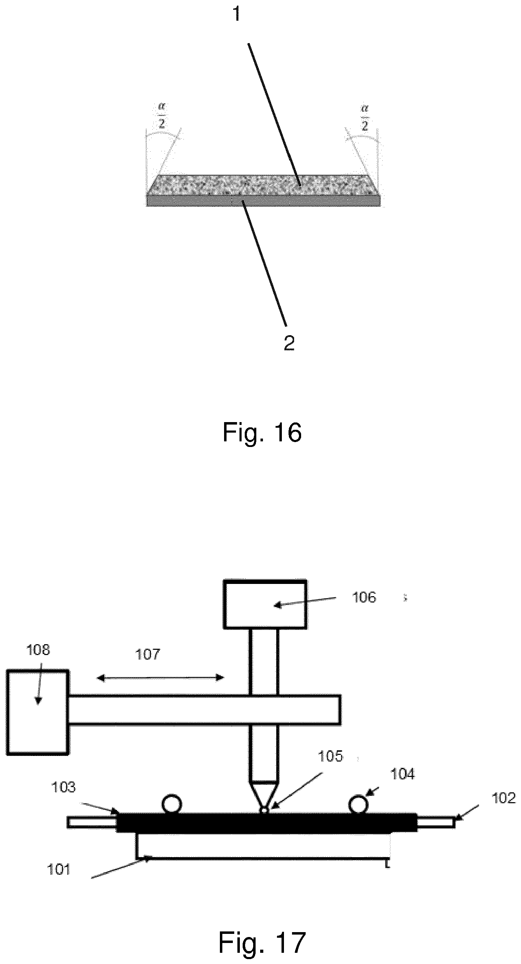

In der Figur 16 ist ein derartiges Klebeband gezeigt.

Vorzugsweise weisen die textilen Träger 1 der Klebebänder eine sich in Richtung der Oberseite, also in Richtung der bei einseitigen Klebebändern klebemassefreien Seite eine sich verjüngende Fase auf. Die Schnittkante der Klebemassenschicht 2 ist hingegen unverändert frei von einer Fase.

Der Winkel der Fase bezogen auf die Schnittkante beträgt gemäß einer bevorzugten Ausführungsform der Erfindung die Hälfte des Mittelpunktswinkels α. Vorzugsweise liegt dieser Fasenwinkel α/2 zwischen 20° und 75°.

Weiter bevorzugt werden folgende Fasenwinkel α/2 abhängig von der Bandbreite verwirklicht:
- zwischen 30° und 75° (insbesondere bei einer Bandbreite von 15 mm)
- zwischen 25° und 65° (insbesondere bei einer Bandbreite von 19 mm)
- zwischen 20° und 55° (insbesondere bei einer Bandbreite von 25 mm)

Als Träger eignen sich prinzipiell alle textilen Trägermaterialien, bevorzugt sind Nähwirkstoffe, also textile Flächengebilde, die durch Maschenbildung eingebundener Wirkfäden in ein flächiges Grundmaterial hergestellt sind, und besonders bevorzugt Vlies-Nähwirkstoffe, also textile Flächengebilde mit Faservlies als Grundmaterial, die durch Maschenbildung eingebundener Wirkfäden verfestigt sind (beispielsweise Maliwatt).

Der Begriff "textiler Träger" beziehungsweise "textiles Flächengebilde" umfasst alle bekannten textilen Träger wie Gelege, Geflechte, Nadelflortextilien, Filze, Gewebe (umfassend Leinwand-, Köper und Atlasbindung) oder Vliese, wobei unter "Vlies" zumindest textile Flächengebilde gemäß EN 29092 (1988) sowie Nähwirkvliese und ähnliche Systeme zu verstehen sind.

Zu den Nähwirkstoffen gehören auch Fadenlagen-Nähwirkstoffe, also textile Flächengebilde mit einer oder mehreren übereinander gelegten Fadenlage(n) als Grundmaterial, die durch Maschenbildung eingebundener Wirkfäden verfestigt sind, zum Beispiel Florofol, Polfaden-Nähwirkstoffe, also textile Flächengebilde, bei denen Wirkfäden als Pol geformt in ein Grundmaterial mittels Maschenbildung eingebunden sind, zum Beispiel Malipol und Schusspol-Nähwirkstoffe, also textile Flächengebilde, bei denen als Pol geformte unvermaschte Fäden durch Wirkfäden mittels Maschenbildung an ein Grundmaterial angebunden sind, zum Beispiel Schusspol.

Weiterhin bevorzugt sind allgemein Vlieswirkstoffe, also textile Flächengebilde, die ohne Verwendung von Fäden durch Bildung von Fasermaschen aus vorgelegtem Faservlies hergestellt sind. Dazu zählen Faser-Vlieswirkstoffe, also textile Flächengebilde aus Faservlies mit einer verfestigenden Fasermaschenseite und einer Seite mit horizontal zur Fasermaschenschicht angeordneten Fasern, wobei Fasern aus dem Faservlies zu Fasermaschen geformt werden, zum Beispiel Malivlies, Polfaser-Vlieswirkstoffe, also textile Flächengebilde aus Faservlies mit oder ohne Verwendung eines Grundmaterials, die aus einer Fasermaschenseite sowie einer Polfaserseite mit nahezu senkrecht zur Fasermaschenschicht angeordneten Fasern bestehen, zum Beispiel Voltex, Kunit oder Maliknit, Maschen-Vlieswirkstoffe, also textile Flächengebilde aus einem Polfaser-Vlieswirkstoff, aus dessen Polfasern eine zweite Fasermaschenschicht gebildet ist, zum Beispiel Multiknit oder Optiknit.

Die obigen Definitionen sind der DIN 61211:2005-05 entnommen.

Als Vliesstoffe kommen verfestigte Stapelfaservliese und auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozessführung ausschließlich oder zumindest überwiegend auf Faserknotenpunkte beschränken, so dass unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malimo" der Firma Karl Mayer, ehemals Malimo, hergestellt und sind unter anderem bei der Firma Tenowo GmbH beziehbar. Ein Malivlies ist dadurch gekennzeichnet, dass ein Querfaservlies durch die Bildung von Maschen aus Fasern des Vlieses verfestigt wird.

Als Träger kann weiterhin ein Vlies vom Typ Kunit oder Multiknit verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Malimo" der Firma Karl Mayer schon seit längerer Zeit hergestellt. Ein weiteres kennzeichnendes Merkmal dieses Vlieses besteht darin, dass es als Längsfaservlies in Längsrichtung hohe Zugkräfte aufnehmen kann. Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt. Als Ausgangsprodukt für ein Multiknit dienen in der Regel ein beziehungsweise zwei nach dem Kunit-Verfahren hergestellte einseitig vermaschte Polfaser-Vlieswirkstoffe. Im Endprodukt sind beide Vliesstoffoberseiten durch Faservermaschungen zu einer geschlossenen Oberfläche geformt und durch nahezu senkrecht stehende Fasern miteinander verbunden. Die zusätzliche Einbringbarkeit weiterer durchstechbarer Flächengebilde und/oder streufähiger Medien ist gegeben.

Schließlich sind auch Nähvliese besonders geeignet. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies (auch als Maliwatt bekannt) sind Nähwirkmaschinen des Typs "Malimo" der Firma Karl Mayer bekannt.

Geeignet sind auch Nadelvliese. Beim Nadelvlies wird ein Faserflor zu einem Flächengebilde mit Hilfe von mit Widerhaken versehenen Nadeln. Durch wechselndes Einstechen und Ausziehen der Nadeln wird das Material auf einem Nadelbalken verfestigt, wobei sich die Einzelfasern zu einem festen Flächengebilde verschlingen. Die Anzahl und Ausführungsform der Vernadelungspunkte (Nadelform, Eindringtiefe, beidseitiges Vernadeln) entscheiden über Stärke und Festigkeit der Fasergebilde, die in der Regel leicht, luftdurchlässig und elastisch sind.

Weiterhin vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 Gew.-% und 50 Gew.-% der Fasern des Vlieses Schmelzfasern sind, insbesondere zwischen 5 Gew.-% und 40 Gew.-% der Fasern des Vlieses.

Ein derartiges Vlies ist dadurch gekennzeichnet, dass die Fasern nass gelegt werden oder zum Beispiel ein Stapelfaservlies durch die Bildung von Maschen aus Fasern des Vlieses durch Nadelung, Vernähung, Luft- und/oder Wasserstrahlbearbeitung vorverfestigt wird.

In einem zweiten Schritt erfolgt die Thermofixierung, wobei die Festigkeit des Vlieses durch das Auf- oder Anschmelzen der Schmelzfasern nochmals erhöht wird.

Für die Nutzung von Vliesen ist besonders die adhäsive Verfestigung von mechanisch vorverfestigten oder nassgelegten Vliesen von Interesse, wobei diese über Zugabe von Bindemittel in fester, flüssiger, geschäumter oder pastöser Form erfolgen kann. Prinzipielle Darreichungsformen sind vielfältig möglich, zum Beispiel feste Bindemittel als Pulver zum Einrieseln, als Folie oder als Gitternetz oder in Form von Bindefasern. Flüssige Bindemittel sind gelöst in Wasser oder organischen Lösemitteln oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, Styrol-Butadien-Systeme, PVC u.ä. sowie deren Copolymere. Im Normalfall handelt es sich dabei um anionische oder nicht-ionogen stabilisierte Dispersionen, in besonderen Fällen können aber auch kationische Dispersionen von Vorteil sein.

Die Art des Bindemittelauftrages kann gemäß dem Stand der Technik erfolgen und ist beispielsweise in Standardwerken der Beschichtung oder der Vliestechnik wie "Vliesstoffe" (Georg Thieme Verlag, Stuttgart, 1982) oder "Textiltechnik-Vliesstofferzeugung" (Arbeitgeberkreis Gesamttextil, Eschborn, 1996) nachzulesen.

Für mechanisch vorverfestigte Vliese, die bereits eine ausreichende Verbundfestigkeit aufweisen, bietet sich der einseitige Sprühauftrag eines Bindemittels an, um Oberflächeneigenschaften gezielt zu verändern.

Neben dem sparsamen Umgang mit dem Bindemittel wird bei derartiger Arbeitsweise auch der Energiebedarf zur Trocknung deutlich reduziert. Da keine Abquetschwalzen benötigt werden und die Dispersionen vorwiegend in dem oberen Bereich des Vliesstoffes verbleiben, kann eine unerwünschte Verhärtung und Versteifung des Vlieses weitgehend verhindert werden.

Für eine ausreichende adhäsive Verfestigung des Vliesträgers ist im allgemeinen Bindemittel in der Größenordnung von 1 % bis 50 %, insbesondere 3 % bis 20 %, bezogen auf das Gewicht des Faservlieses, zuzugeben.

Die Zugabe des Bindemittels kann bereits bei der Vliesherstellung, bei der mechanischen Vorverfestigung oder aber in einem gesonderten Prozessschritt erfolgen, wobei dieser in-line oder offline durchgeführt werden kann. Nach der Bindemittelzugabe muss temporär für das Bindemittel ein Zustand erzeugt werden, in dem dieses klebend wird und adhäsiv die Fasern verbindet - dies kann während der Trocknung zum Beispiel von Dispersionen, aber auch durch Erwärmung erreicht werden, wobei über flächige oder partielle Druckanwendung weitere Variationsmöglichkeiten gegeben sind. Die Aktivierung des Bindemittels kann in bekannten Trockenkanälen, bei geeigneter Bindemittelauswahl aber auch mittels Infrarotstrahlung, UV-Strahlung, Ultraschall, Hochfrequenzstrahlung oder dergleichen erfolgen.

Eine weitere Sonderform der adhäsiven Verfestigung besteht darin, dass die Aktivierung des Bindemittels durch Anlösen oder Anquellen erfolgt. Prinzipiell können hierbei auch die Fasern selbst oder zugemischte Spezialfasern die Funktion des Bindemittels übernehmen. Da für die meisten polymeren Fasern derartige Lösemittel jedoch aus Umweltgesichtspunkten bedenklich beziehungsweise problematisch in ihrer Handhabung sind, wird dieses Verfahren eher selten angewandt.

Weiter vorzugsweise wird als textiler Träger ein Gewebe eingesetzt. Besonders bevorzugte Gewebe sind wie folgt aufgebaut:
- die Fadenzahl in der Kette 10 bis 60/cm beträgt
- die Fadenzahl im Schuss 10 bis 40/cm beträgt
- die Kettfäden ein Garngewicht zwischen 40 und 500 dtex, insbesondere zwischen 111 und 450 dtex, besonders bevorzugt von 270 bis 420 dtex besitzen
- die Schussfäden ein Garngewicht zwischen 111 und 660 dtex, insbesondere zwischen 111 und 450 dtex, besonders bevorzugt von 220 bis 420 dtex besitzen

Gemäß einer weiteren vorteilhaften Ausführungsform der Erfindung beträgt die Fadenzahl in der Kette 20 bis 40/cm, vorzugsweise 20 bis 30cm.

Gemäß einer weiteren vorteilhaften Ausführungsform der Erfindung beträgt die Fadenzahl im Schuss 14 bis 26/cm, vorzugsweise 16 bis 22/cm.

Gemäß einer weiteren vorteilhaften Ausführungsform der Erfindung handelt es sich bei dem Gewebe um ein Polyestergewebe, ein Mischgewebe aus Polyester und Polyamid oder ein Mischgewebe aus Garnen, wo Polyerster und Polyamid als gemischter Faden ausgebildet ist.

Weiter bevorzugt beträgt die Dicke des Gewebes maximal 400 µm, besonders bevorzugt 220 bis 310 µm, ganz besonders bevorzugt 260 bis 300 µm.

Ebenfalls können Abstandsgewebe und -gewirke mit Kaschierung verwendet werden.

Abstandsgewirke stellen doppelflächige Textilien dar, bei denen die kettengewirkten Warenflächen durch abstandshaltende Verbindungsfäden, sogenannte Polfäden, auf Distanz gehalten werden. Es handelt sich bei den Abstandsgewirken um Maschenwaren beziehungsweise Gewirke, die um die dritte Dimension erweitert wurden. Abstandsgewebe besitzen ebenfalls zwei im Abstand angeordnete Gewebeschichten, die durch Filamente bzw. Fäden oder Fasern auf Abstand gehalten werden. Derartige Abstandsgewebe werden in der EP 0 071 212 B1 offenbart.

Vorteilhaft und zumindest bereichsweise kann der Träger eine ein- oder beidseitig glattgeschliffene Oberfläche aufweisen, vorzugsweise jeweils eine vollflächig glattgeschliffene Oberfläche. Die glattgeschliffene Oberfläche mag gechintzt sein, wie es beispielsweise in der EP 1 448 744 A1 im Detail erläutert wird.

Des Weiteren kann der Träger zur Verdichtung in einem Walzwerk kalandert werden. Vorzugsweise laufen die beiden Walzen gegenläufig und mit der gleichen Umfangsgeschwindigkeit, so dass der Träger gepresst und verdichtet wird.

Wenn die Umfangsgeschwindigkeit der Walzen differiert, dann wird der Träger zusätzlich glattgeschliffen.

Der textile Träger des Klebebandes weist gemäß einer weiteren vorteilhaften Ausführungsform der Erfindung ein Flächengewicht bis zu 300 g/m² auf, bevorzugt 125 bis 200 g/m².

Als Ausgangsmaterialien für das Trägermaterial des Klebebandes kommen Fasern (Stapelfaser oder Endlosfilament) aus einem thermoplastischen Material zum Einsatz.

Der Anteil der thermoplastischen Fasern in dem Trägermaterial beträgt vorzugsweise mindestens 50 Gew.-% oder mehr, weiter vorzugsweise 70 Gew.-% oder mehr, weiter vorzugsweise 90 Gew.-% oder mehr, weiter vorzugsweise 100 Gew.-%.

Bevorzugt bestehen die thermoplastischen Fasern oder Filamente aus Polyester (zum Beispiel PET (Polyethylenterephthalat) oder PBT), (nicht aromatisches) Polyamid (zum Beispiel Polyamid 6, Polyamid 6.6, Polyamid 4.6 oder andere Polyamide). Daneben sind auch Polyolefine wie Polyethylen (PE (PE-LD, PE-HD)) oder Polypropylen (PP), Polyphthalamide (PPA, partiell aromatische Polyamide) oder PVC geeignet.

Vorzugsweise enthalten die Fasern und/oder Filamente des textilen Trägermaterials Polyamid oder Polyester wie Polyethylenterephthalat, vorzugsweise bestehen sie jeweils daraus. Weiter vorzugsweise werden zur Bildung der Fasern oder Filamente sortenreine Thermoplaste eingesetzt, also nur PET oder Polyamid. Es sind auch Mischungen der aufgeführten Thermoplaste möglich, dabei können sortenreine Garne wechselweise eingesetzt werden oder als Mischgarne vorliegen. Bei Mischgarnen sind sortenunterschiedliche Polymere zu einem Garn verbunden oder verdreht.

Die zu den Thermoplasten zugemischte Charge an (Chemie)Fasern (Stapelfaser oder Endlosfilament) umfasst nichtthermoplastische Kunststoffe und (Chemie)Fasern aus natürlichen Polymeren wie zellulosische Fasern (Viskose, Modal, Lyocell, Cupro, Acetat, Triacetat, Cellulon), wie Gummifasern, wie Pflanzeneiweißfasern und/oder wie Tiereiweißfasern und/oder natürliche Fasern aus Baumwolle, Sisal, Flachs, Seide, Hanf, Leinen, Kokos oder Wolle vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern in der zweiten Charge eingesetzt werden.

Des Weiteren sind Garne, gefertigt aus den angegebenen Fasern, ebenfalls geeignet.

Die zusätzlichen Nähfäden, die beispielsweise bei einem Vlies-Nähwirkstoff erforderlich sind, können aus den genannten Polymeren bestehen. Bevorzugt sind Nähfäden aus Polyethylenterephthalat oder Polyamid.

Bei Geweben oder Gelegen können einzelne Fäden aus einem Mischgarn hergestellt werden. In der Regel sind die Kettfäden und die Schussfäden jedoch jeweils sortenrein ausgebildet.

Die Kettfäden und/oder die Schussfäden bei Geweben oder Gelegen können zu 100 Gew.-% aus thermoplastischen Fäden bestehen. Möglich ist auch, dass nur die Kettfäden oder nur die Schussfäden zu 100 Gew.-% aus thermoplastischen Fäden bestehen, wobei der Anteil der thermoplastischen Fasern im Gewebe vorzugsweise mindestens 50 Gew.-% beträgt.

Die Garne oder Fäden der Gewebe können als Filamente vorliegen. Im Sinne dieser Erfindung wird unter einem Filament ein Bündel paralleler, gerader Einzelfasern/Einzelfilamente verstanden, in der Literatur auch oft als Multifilament bezeichnet. Gegebenenfalls kann dieses Faserbündel durch Verdrehen in sich verfestigt werden, dann spricht man von gesponnenen oder gezwirnten Filamenten. Alternativ kann das Faserbündel durch Verwirbeln mit Druckluft oder Wasserstrahl in sich verfestigt werden. Im Weiteren wird für alle diese Ausführungsformen verallgemeinernd nur noch der Begriff Filament verwendet.

Das Filament kann texturiert oder glatt und punktverfestigt oder unverfestigt vorliegen.

Die Fasern, insbesondere diejenigen, die zur Vliesbildung eingesetzt werden, haben vorzugsweise eine Faserstärke von 1,5 bis 5,5 dtex und/oder eine Faserlänge von 30 bis 90 mm.

Die Nähfadenanzahl liegt vorzugsweise im Bereich von 15 bis 25 Fäden/ 25 mm.

Vorteilhaft liegt das Flächengewicht des textilen Trägers zwischen 30 g/m² und 300 g/m², wobei die beiden genannten Grenzwerte explizit von der Bereichsangabe umfasst sind (dies gilt für alle folgenden aufgeführten Parameterbereiche mutatis mutandis ebenso), weiter vorteilhaft zwischen 50 g/m² und 200 g/m², besonders vorteilhaft zwischen 50 g/m² und 200 g/m², ganz besonders vorteilhaft zwischen 70 g/m² und 190 g/m².

Bei Geweben beträgt das Flächengewicht bevorzugt 50 g/m² bis 200 g/m², insbesondere 175 g/m². Bei Vliesen beträgt das Flächengewicht bevorzugt 50 g/m² bis 200 g/m², weiter bevorzugt 70 g/m² bis 190 g/m².

Weiter vorzugsweise weisen die textilen Träger eine Biegesteifigkeit im Bereich von 0 bis 30 mN/60 mm als textiler Träger vor der Klebmassebeschichtung (MD, machine direction) auf, optional von 2 bis 30 mN/60 mm als textiler Träger vor der Klebmassebeschichtung (MD), woraus sehr gute flaggingfreie Klebebänder erhalten werden.

Der Klebemasseauftrag, bezogen auf die Trägerfläche, liegt bevorzugt zwischen 300 und 160 g/m², vorzugsweise zwischen 50 und 100 g/m², weiter vorzugsweise zwischen 60 und 90 g/m².

Für die Klebemasse kann auf alle bekannten Klebemassensysteme zurückgegriffen werden. Neben Natur- oder Synthesekautschuk basierten Klebemassen sind insbesondere Silikonklebemassen sowie Polyacrylatklebemassen verwendbar.

Sofern auf den freiliegenden Oberflächen des ersten oder des zweiten Trägers weitere Klebemassenschichten vorhanden sind, können diese auch aus den im Folgenden Klebemassen gewählt werden.

Vorzugsweise ist die Klebemasse eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Haftklebstoffe können als extrem hochviskose Flüssigkeiten mit einem elastischen Anteil betrachtet werden. Haftklebstoffe haben demzufolge besondere, charakteristische viskoelastische Eigenschaften, die zu der dauerhaften Eigenklebrigkeit und Klebfähigkeit führen.

Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des jeweiligen Haftklebstoffs als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Auffließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Besonders bevorzugt ist eine Haftklebemasse in Form einer getrockneten Polymerdispersion, wobei das Polymer aufgebaut ist aus:
(a) 95,0 bis 100,0 Gew.-% n-Butylacrylat und/oder 2-Ethylhexylacrylat
(b) 0,0 bis 5,0 Gew.-% eines ethylenisch ungesättigten Monomers mit einer Säure- oder Säureanhydridfunktion

Vorzugsweise besteht das Polymer aus 95,0 bis 99,5 Gew.-% n-Butylacrylat und/oder 2-Ethylhexylacrylat und 0,5 bis 5 Gew.-% eines ethylenisch ungesättigten Monomers mit einer Säure- oder Säureanhydridfunktion, weiter vorzugsweise aus 97,0 oder 98,0 Gew.-% bis 99,0 Gew.-% n-Butylacrylat und/oder 2-Ethylhexylacrylat und 1,0 bis 2,0 Gew.-% oder 3 Gew.-% eines ethylenisch ungesättigten Monomers mit einer Säure- oder Säureanhydridfunktion.

Neben den aufgeführten Acrylatpolymeren können der Haftklebemasse neben gegebenenfalls vorhandenen Restmonomeren zusätzlich Klebrigmacher und/oder Zuschlagstoffe wie Lichtschutz- oder Alterungsschutzmittel zugesetzt werden.

Insbesondere sind keine weiteren Polymere wie Elastomere in der Haftklebemasse enthalten, das heißt, die Polymere der Haftklebemasse bestehen nur aus den Monomeren (a) und (b) in den angegebenen Mengenverhältnissen.

Bevorzugt bildet n-Butylacrylat das Monomer (a).

Als Monomer (b) kommen vorteilhaft in Betracht zum Beispiel Acrylsäure, Methacrylsäure, Itaconsäure, Maleinsäure, Fumarsäure und/oder Maleinsäureanhydrid.

Bevorzugt ist (Meth-)acrylsäure der Formel I, 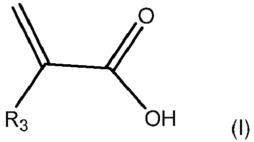 wobei R³ = H oder CH₃ ist, bevorzugt wird gegebenenfalls die Mischung aus Acrylsäure oder Methacrylsäure verwendet. Besonders bevorzugt ist Acrylsäure.

Gemäß einer besonders bevorzugten Variante weist das Polymer die folgende Zusammensetzung auf:
(a) 95,0 bis 100,0 Gew.-%, vorzugsweise 95,0 bis 99,5 Gew.-%, weiter vorzugsweise 98,0 bis 99,0 Gew.-% n-Butylacrylat und
(b) 0,0 bis 5,0 Gew.-%, vorzugsweise 0,5 bis 5,0 Gew.-%, weiter vorzugsweise 1,0 bis 2,0 Gew.-% Acrylsäure

Die Polymerdispersion wird hergestellt durch das Verfahren der Emulsionspolymerisation der genannten Komponenten. Beschreibungen dieses Verfahrens sind zum Beispiel zu finden in "Emulsion Polymerization and Emulsion Polymers" von Peter A. Lovell and Mohamed S. El-Aasser - Wiley-VCH 1997 - ISBN 0-471-96746-7 oder in EP 1 378 527 B1.

Bei der Polymerisation ist es nicht auszuschließen, dass nicht alle Monomere zu Polymeren umgesetzt werden. Dabei ist es naheliegend, dass der Restmonomergehalt möglichst klein sein soll.

Bevorzugt werden Klebemassen umfassend die Polymerdispersion mit einem Restmonomerengehalt von kleiner gleich 1 Gew.-%, insbesondere kleiner gleich 0,5 Gew.-% (bezogen auf die Masse der getrockneten Polymerdispersion) bereitgestellt.

Unter einem "Klebharz" wird entsprechend dem allgemeinem Fachmannverständnis ein oligomeres oder polymeres Harz verstanden, das die Autoadhäsion (den Tack, die Eigenklebrigkeit) der Haftklebemasse im Vergleich zu der keinen Klebharz enthaltenden, ansonsten aber identischen Haftklebemasse erhöht.

Der Einsatz von Klebrigmachern zur Steigerung der Klebkräfte von Haftklebemassen ist grundsätzlich bekannt. Dieser Effekt stellt sich auch ein, wenn der Klebmasse bis zu 15 Gewichtsteile (entspricht < 15 Gewichtsteile), beziehungsweise 5 bis 15 Gewichtsteile Klebrigmacher (bezogen auf die Masse der getrockneten Polymerdispersion) hinzugefügt werden. Bevorzugt werden 5 bis 12, weiter bevorzugt 6 bis 10 Gewichtsteile Klebrigmacher (bezogen auf die Masse der getrockneten Polymerdispersion) hinzugefügt.

Als Klebrigmacher, auch als Klebharze bezeichnet, sind prinzipiell alle bekannten Stoffklassen geeignet. Klebrigmacher sind beispielsweise Kohlenwasserstoffharze (zum Beispiel Polymere auf Basis ungesättigter C₅- oder C₉-Monomere), Terpenphenolharze, Polyterpenharze auf Basis von Rohstoffen wie zum Beispiel α- oder β-Pinen, aromatische Harze wie Cumaron-Inden-Harze oder Harze auf Basis Styrol oder α-Methylstyrol wie Kolophonium und seine Folgeprodukte, zum Beispiel disproportioniertes, dimerisiertes oder verestertes Kolophonium, zum Beispiel Umsetzungsprodukte mit Glycol, Glycerin oder Pentaerythrit, um nur einige zu nennen. Bevorzugt werden Harze ohne leicht oxidierbare Doppelbindungen wie Terpenphenolharze, aromatische Harze und besonders bevorzugt Harze, die durch Hydrierung hergestellt sind wie zum Beispiel hydrierte Aromatenharze, hydrierte Polycyclopentadienharze, hydrierte Kolophoniumderivate oder hydrierte Polyterpenharze.

Bevorzugt sind Harze auf Basis von Terpenphenolen und Kolophoniumestern. Ebenfalls bevorzugt sind Klebharze mit einem Erweichungspunkt oberhalb von 80 °C gemäß ASTM E28-99 (2009). Besonders bevorzugt sind Harze auf Basis von Terpenphenolen und Kolophoniumestern mit einem Erweichungspunkt oberhalb von 90 °C gemäß ASTM E28-99 (2009). Die Harze werden zweckmäßigerweise in Dispersionsform eingesetzt. Sie lassen sich so problemlos mit der Polymerdispersion feinverteilt mischen.

Besonders bevorzugt ist die Variante, bei der der Haftklebemasse keinerlei Klebharze zugesetzt sind. Insbesondere nicht zugesetzt werden der Haftklebemasse die folgenden Substanzen:
- Kohlenwasserstoffharze (zum Beispiel Polymere auf Basis ungesättigter C₅- oder C₉-Monomere)
- Terpenphenolharze
- Polyterpenharze auf Basis von Rohstoffen wie zum Beispiel α- oder β-Pinen
- aromatische Harze wie Cumaron-Inden-Harze oder Harze auf Basis Styrol oder α-Methylstyrol wie Kolophonium und seine Folgeprodukte, zum Beispiel disproportioniertes, dimerisiertes oder verestertes Kolophonium, zum Beispiel Umsetzungsprodukte mit Glycol, Glycerin oder Pentaerythrit

Wegen der besonderen Eignung als Klebemasse für Klebebänder von automobilen Kabelsätzen in Hinblick auf die Foggingfreiheit sind lösungsmittelfreie Acrylat-Hotmeltmassen zu bevorzugen, wie sie in DE 198 07 752 A1 sowie in DE 100 11 788 A1 näher beschrieben sind.

Unter Fogging (siehe DIN 75201 A) wird der Effekt verstanden, dass bei ungünstigen Verhältnissen niedermolekulare Verbindungen aus den Klebebändern ausgasen können und an kalten Teilen kondensieren. Dadurch kann beispielsweise die Sicht durch die Windschutzscheibe beeinträchtigt werden.

Als Klebemasse ist eine solche auf Acrylathotmelt-Basis geeignet, die einen K-Wert von mindestens 20 aufweist, insbesondere größer 30 (gemessen jeweils in 1 Gew.-%iger Lösung in Toluol, 25°C), erhältlich durch Aufkonzentrieren einer Lösung einer solchen Masse zu einem als Hotmelt verarbeitbaren System.

Das Aufkonzentrieren kann in entsprechend ausgerüsteten Kesseln oder Extrudern stattfinden, insbesondere beim damit einhergehenden Entgasen ist ein Entgasungs-Extruder bevorzugt.

Eine derartige Klebemasse ist in der DE 43 13 008 C2 dargelegt. Diesen auf diesem Wege hergestellten Acrylatmassen wird in einem Zwischenschritt das Lösungsmittel vollständig entzogen.

Der K-Wert wird dabei insbesondere bestimmt in Analogie zu DIN 53 726.

Zusätzlich werden dabei weitere leichtflüchtige Bestanteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden.

Die Lösung der Masse kann 5 bis 80 Gew.-%, insbesondere 30 bis 70 Gew.-% Lösungsmittel enthalten. Vorzugsweise werden handelsübliche Lösungsmittel eingesetzt, insbesondere niedrig siedende Kohlenwasserstoffe, Ketone, Alkohole und/oder Ester.

Weiter vorzugsweise werden Einschnecken-, Zweischnecken- oder Mehrschneckenextruder mit einer oder insbesondere zwei oder mehreren Entgasungseinheiten eingesetzt.

In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A beschrieben.

Die Klebemasse auf Acrylathotmelt-Basis kann UV-vernetzt werden. Andere Vernetzungsarten sind aber auch möglich, zum Beispiel die Elektronenstrahlenvernetzung.

In einer weiteren bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.

Der Restlösungsmittel-Gehalt sollte unter 1 Gew.-% betragen.

Eine Klebemasse, die sich als besonders geeignet zeigt, ist eine niedermolekulare Acrylatschmelzhaftklebemasse, wie sie unter der Bezeichnung acResin UV oder Acronal^{®}, insbesondere acResin A 260UV, von der BASF geführt wird. Diese Klebemasse mit niedrigem K-Wert erhält ihre anwendungsgerechten Eigenschaften durch eine abschließende strahlenchemisch ausgelöste Vernetzung.

Weitere hervorragend geeignete Klebemassen werden in der EP 3 540 024 A1, der EP 2 520 627 A1, der EP 2 522 705 A1, der EP 2 520 628 A1, der EP 2 695 926 A1 und der EP 2 520 629 A1 beschrieben.

Ebenfalls bevorzugt besteht die Klebebeschichtung aus einer Klebmasse auf Basis Synthesekautschuk, nämlich insbesondere eine Klebemasse aus mindestens einem Vinylaromaten-Block-Copolymer und zumindest einem Klebharz. Typische Einsatzkonzentrationen für das Blockcopolymer liegen in einer Konzentration im Bereich zwischen 30 Gew.-% und 70 Gew.-%, insbesondere im Bereich zwischen 35 Gew.-% und 55 Gew.-%.

Als weitere Polymere können solche auf Basis reiner Kohlenwasserstoffe wie zum Beispiel ungesättigte Polydiene wie natürliches oder synthetisch erzeugtes Polyisopren oder Polybutadien, chemisch im Wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk sowie chemisch funktionalisierte Kohlenwasserstoffe wie zum Beispiel halogenhaltige, acrylathaltige oder vinyletherhaltige Polyolefine vorhanden sein, welche die vinylaromatenhaltigen Blockcopolymere bis zur Hälfte ersetzen können.

Als Klebrigmacher dienen Klebharze, die mit dem Elastomerblock der Styrolblockcopolymere verträglich sind.

Plastifizierungsmittel wie zum Beispiel Flüssigharze, Weichmacheröle oder niedermolekulare flüssige Polymere wie zum Beispiel niedermolekulare Polyisobutylene mit Molmassen < 1500 g/mol (Zahlenmittel) oder flüssige EPDM-Typen werden typischerweise eingesetzt.

Als weitere Additive können allen genannten Typen von Klebemassen Lichtschutzmittel wie zum Beispiel UV-Absorber, sterisch gehinderte Amine, Antiozonantien, Metalldesaktivatoren, Verarbeitungshilfsmittel, endblockverstärkende Harze zugesetzt werden.

Füllstoffe wie zum Beispiel Siliziumdioxid, Glas (gemahlen oder in Form von Kugeln als Voll- oder Hohlkugeln), Mikroballons, Aluminiumoxide, Zinkoxide, Calciumcarbonate, Titandioxide, Ruße, Silikate und Kreide, um nur einige zu nennen, ebenso Farbpigmente und Farbstoffe sowie optische Aufheller können ebenfalls Verwendung finden.

Üblicherweise werden Haftklebemassen primäre und sekundäre Antioxidantien zugesetzt, um ihre Alterungsstabilität zu verbessern. Primäre Antioxidantien reagieren dabei mit Oxi- und Peroxiradikalen, die sich in Gegenwart von Sauerstoff bilden können, und reagieren mit diesen zu weniger reaktiven Verbindungen. Sekundäre Antioxidantien reduzieren zum Beispiel Hydroperoxide zu Alkoholen. Bekanntermaßen besteht ein synergistischer Effekt zwischen primären und sekundären Alterungsschutzmitteln, so dass der Schutzeffekt einer Mischung häufig größer ist als die Summe der beiden Einzeleffekte.

Ist eine Schwerentflammbarkeit des beschriebenen Klebebands erwünscht, lässt sich diese erzielen, indem dem Träger und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Die Herstellung und Verarbeitung der Haftklebemassen kann aus Lösung, Dispersion sowie aus der Schmelze erfolgen. Bevorzugte Herstell- und Verarbeitungsverfahren erfolgen aus der Schmelze. Für den letzteren Fall umfassen geeignete Herstellprozesse sowohl Batchverfahren als auch kontinuierliche Verfahren.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband weist somit eine Längsausdehnung und eine Breitenausdehnung auf. Das Klebeband weist auch eine senkrecht zu beiden Ausdehnungen verlaufende Dicke auf, wobei die Breitenausdehnung und Längsausdehnung um ein Vielfaches größer sind als die Dicke. Die Dicke ist über die gesamte durch Länge und Breite bestimmte Flächenausdehnung des Klebebands möglichst gleich, vorzugsweise exakt gleich.

Das Klebeband liegt insbesondere in Bahnform vor. Unter einer Bahn wird ein Objekt verstanden, dessen Länge um ein Vielfaches größer ist als die Breite und die Breite entlang der gesamten Länge in etwa vorzugsweise genau gleichbleibend ausgebildet ist.

Auf der freiliegenden Oberseite des Trägers kann ein Rückseitenlack (Funktionsschicht) aufgetragen sein, um die Abrolleigenschaften des zur archimedischen Spirale gewickelten Klebebandes günstig zu beeinflussen. Dieser Rückseitenlack kann dazu Silikon- oder Fluorsilikonverbindungen sowie Polyvinylstearylcarbamat, Polyethyleniminstearylcarbamid oder fluororganische Verbindungen als dehäsiv wirkende Stoffe enthalten.

Die Klebemasse kann in Längsrichtung des Klebebands in Form eines Streifens aufgebracht sein, der eine geringere Breite aufweist als der erste Träger.

Je nach Verwendungsfall können auch mehrere parallele Streifen des Klebers auf dem Trägermaterial beschichtet sein.

Die Lage des Streifens auf dem Träger ist frei wählbar, wobei eine Anordnung direkt an einer der Kanten des Trägers bevorzugt wird.

Bevorzugt ist die Klebemasse vollflächig auf dem ersten Träger aufgetragen.

Auf der Klebebeschichtung des Trägers kann zumindest ein Streifen einer Eindeckung vorgesehen sein, der oder die sich in Längsrichtung des Klebebands erstrecken und der oder die zwischen 20 % und 90 % der Klebebeschichtung abdecken.

Bevorzugt deckt der Streifen insgesamt zwischen 50 % und 80 % der Klebebeschichtung ab. Der Abdeckungsgrad ist gewählt in Abhängigkeit von der Anwendung und von dem Durchmesser des Kabelsatzes.

Die angegebenen Prozentzahlen beziehen sich auf die Breite der Streifen der Eindeckung in Bezug auf die Breite des Trägers.

Gemäß einer bevorzugten Ausführungsform der Erfindung ist genau ein Streifen der Eindeckung auf der Klebebeschichtung vorhanden.

Die Lage des Streifens auf der Klebebeschichtung ist frei wählbar, wobei eine Anordnung direkt an einer der Längskanten des Trägers bevorzugt wird. Auf diese Weise ergibt sich ein in Längsrichtung des Klebebands erstreckender Klebestreifen, der mit der anderen Längskante des Trägers abschließt.

Wird das Klebeband zur Ummantelung eines Kabelbaums eingesetzt, indem das Klebeband in einer schraubenlinienförmigen Bewegung um den Kabelbaum geführt wird, kann die Umhüllung des

Kabelbaums so erfolgen, dass die Klebemasse des Klebebands nur auf dem Klebeband selbst verklebt wird, während das Gut mit keinem Kleber in Berührung kommt.

Der so ummantelte Kabelbaum weist aufgrund der fehlenden Fixierung der Kabel durch irgendeinen Kleber eine sehr hohe Flexibilität auf. Damit ist seine Biegefähigkeit beim Einbau - gerade auch in engen Durchgängen oder scharfen Abbiegungen - deutlich erhöht.

Falls eine gewisse Fixierung des Klebebands auf dem Gut gewünscht wird, kann die Ummantelung derartig erfolgen, dass der Klebestreifen zu einem Teil auf dem Klebeband selbst und zu einem anderen Teil auf dem Gut verklebt wird.

Gemäß einer anderen vorteilhaften Ausführungsform ist der Streifen mittig auf der Klebebeschichtung aufgebracht, so dass sich zwei an den Längskanten des Trägers in Längsrichtung des Klebebands erstreckende Klebestreifen ergeben.

Für das sichere und wirtschaftliche Aufbringen des Klebebands in besagter schraubenlinienförmiger Bewegung um den Kabelbaum und gegen das Verrutschen der sich ergebenden Schutzumhüllung sind die zwei jeweils an den Längskanten des Klebebands vorhandenen Klebestreifen vorteilhaft, insbesondere wenn einer, der meist schmaler als der zweite Streifen ist, als Fixierungshilfe dient und der zweite, breitere Streifen als Verschluss dient. Auf diese Weise ist das Klebeband so auf dem Kabel verklebt, dass der Kabelsatz gegen Verrutschen gesichert und dennoch flexibel gestaltet ist.

Daneben gibt es Ausführungsformen, bei denen mehr als ein Streifen der Eindeckung auf der Klebebeschichtung aufgebracht sind. Wenn lediglich von einem Streifen die Rede ist, liest der Fachmann in Gedanken mit, dass durchaus auch mehrere Streifen gleichzeitig die Klebebeschichtung eindecken können.

Der Herstellprozess des erfindungsgemäßen Klebebandes erschöpft sich in der Beschichtung des Trägers direkt oder im Transferverfahren mit einer geeigneten Klebemasse in einem oder mehreren nacheinander durchgeführten Arbeitsgängen.

Der textile Träger kann mit einer Beschichtung vorbehandelt werden (mit beliebigem filmbildendem Stoff aus Lösung, Dispersion, Schmelze und/oder strahlenhärtend), um dann in einem nachgeschalteten Arbeitsschritt direkt oder im Transferverfahren mit der Haftklebemasse versehen zu werden.

Als Auftragsaggregate werden die üblichen eingesetzt: Drahtrakel, Streichbalken, Walzenauftrag, Düsenbeschichtung, Doppelkammerrakel, Mehrfachkaskadendüse.

Gemäß einer bevorzugten Ausführungsform der Erfindung ist die Klebemasse nach dem Aufbringen auf den Träger zu mehr als 10 %, vorzugsweise zu mehr als 25 %, weiter vorzugsweise zu mehr als 50 % in den Träger eingesunken. Ein Zahlenwert von beispielsweise 25 % bedeutet dabei, dass die Klebemasse über eine Schichtdicke von 25 % der Dicke des textilen Trägers eingedrungen ist, also bei einem Träger mit einer Dicke von 100 µm über eine Schichtdicke von 25 µm innerhalb des Trägers, und zwar beginnend von der Fläche des Trägers, auf der die Klebemasse beschichtet ist, und in senkrechter Richtung zu der von der Längs- beziehungsweise Quererrichtung aufgespannten Ebene.

Aufgrund der geschilderten positiven Eigenschaften lässt sich das Klebeband hervorragend zum Isolieren und Wickeln von Drähten oder Kabeln verwenden.

Vorzugsweise wird das Klebeband zum Ummanteln von langgestrecktem Gut wie insbesondere Kabelsätzen eingesetzt, wobei das Klebeband in einer schraubenförmigen Bewegung um das langgestreckte Gut geführt wird. Es ergibt sich die Form einer Helix (auch Schraube, Schraubenlinie, zylindrische Spirale oder Wendel genannt; Helix ist eine Kurve, die sich mit konstanter Steigung um den Mantel eines Zylinders windet).

In einer Variante wird das langgestreckte Gut in axialer Richtung von dem Klebeband umhüllt. Die Umwicklung eines Kabelbaums mit dem beschriebenen Klebeband erfolgt dabei nicht - wie üblich - schraubenlinienförmig, sondern derart, dass beim Umwickeln eine Längsachse des Bandes im Wesentlichen parallel zur Verlaufsrichtung des Kabelbaums ausgerichtet ist. Im Querschnitt gesehen liegt das Klebeband dabei in Form einer archimedischen Spirale um den Kabelbaum. Diese Art der Wicklung wird auch "Einschlagen des Kabelbaums" genannt. Diese Schneidverfahren, wobei die Schneidkanten versiegelt werden, kann zum Konfektionieren von beschichteten Klebebändern und unbeschichteten textilen Träger eingesetzt werden. Beide Materialien werden für die Herstellung von Produkten zur Längsumhüllung von Kabelbäumen benötigt und eingesetzt.

Die Bereitstellung von Klebebändern mit einer besonders großen ununterbrochenen Länge ist mit Tellerrollen in Form einer archimedischen Spirale nicht mehr möglich. Die Konfektionierung erfolgt üblicherweise in Form einer Spule, die eine vielfache Breite des Klebebandes aufweist und das Klebeband in schraubenförmiger Wicklung in einer Vielzahl von Lagen aufgespult wird. Beim Abwickeln der Spulen liegt die Klebeschicht der oberen Lage häufig auf den Schneidkanten der unteren Lage und es kommt zu einer besonderen Beanspruchung der Schneidkanten. Hier ist eine besonders feste Schneidkante wünschenswert, um das Ausziehen von Fasern / Filamenten zu vermeiden. Auch in dieser Konfektionierform hat sich ein Klebeband hergestellt mit dem im Anspruch 1 beschriebenen Verfahren als positiv und vorteilhaft erwiesen.

Ebenfalls vom erfinderischen Gedanken umfasst ist ein ummanteltes langgestrecktes Gut, wie insbesondere ein Kabelsatz, ummantelt mit einem erfindungsgemäßen Klebeband, sowie ein Fahrzeug, enthaltend ein derartig ummanteltes langgestrecktes Gut.

Gemäß einer Ausführungsform der Erfindung handelt es sich bei dem langgestreckten Gut um einen Kabelstrang, der ein Bündel aus mehreren Kabeln wie 3 bis 1000 Kabeln, bevorzugt 10 bis 500 Kabeln, insbesondere zwischen 50 und 300 Kabeln umfasst.

Aufgrund der hervorragenden Eignung des Klebebandes kann es in einer Ummantelung Verwendung finden, die aus einer Eindeckung besteht, bei der zumindest in einem Kantenbereich der Eindeckung das selbstklebend ausgerüstete Klebeband vorhanden ist, das so auf der Eindeckung verklebt ist, dass sich das Klebeband über eine der Längskanten der Eindeckung erstreckt, und zwar vorzugsweise in einem im Vergleich zur Breite der Eindeckung schmalen Kantenbereich.

Ein derartiges Produkt sowie optimierte Ausführungsformen desselben werden in der EP 1 312 097 A1 offenbart. In der EP 1 300 452 A2, der DE 102 29 527 A1 sowie der WO 2006/108871 A1 werden Weiterentwicklungen dargestellt, für die das erfindungsgemäße Klebeband ebenfalls sehr gut geeignet ist. Ebenso kann das erfindungsgemäße Klebeband in einem Verfahren Verwendung finden, wie es die EP 1 367 608 A2 offenbart.

Schließlich beschreiben die EP 1 315 781 A1 sowie die DE 103 29 994 A1 Ausführungsformen von Klebebändern, wie sie auch für das erfindungsgemäße Klebeband möglich sind.

Um die richtige Anwendung des Klebebands insbesondere an Kabelbäumen sicherzustellen, kann zumindest eine in Längsrichtung verlaufende Kennzeichnungslinie auf der Oberseite des Trägers vorhanden sein. Bevorzugt sind zwei Kennzeichnungslinien. Diese Kennzeichnungslinien unterscheiden sich optisch und/oder haptisch von der sie umgebenden Oberfläche.

Die Markierung ist auf den Träger aufgebracht, beispielsweise durch Drucken. Alternativ oder zusätzlich kann aber auch so vorgegangen werden, dass die Markierung in den ersten Träger eingearbeitet ist. So lässt sich die Markierung als gleichsam eingewebter Kettfaden realisieren.

Die EP 3 245 265 A1 beschreibt die Verwendung einer derartigen Kennzeichnungslinie auf einem Klebeband.

Um ein besonders einfaches Arbeiten für den Anwender zu ermöglichen, sind Perforationen in dem Klebeband vorhanden, die insbesondere rechtwinklig zur Laufrichtung des Klebebands ausgerichtet und/oder in regelmäßigen Abständen angeordnet sind.

Die Perforation dient dabei in erster Linie als Abreißhilfe zur Ablängung auf die vorgegebene Länge. In dem Stück des Klebebands, das das Gut ummantelt, sollten keine Perforationen vorhanden sein, um eine mechanische Schwächung der Umhüllung beim Transport und Einbau zu vermeiden.

Besonders vorteilhaft lassen sich die Perforationen diskontinuierlich mit Flachstanzen oder querlaufenden Perforationsrädern sowie kontinuierlich unter Verwendung von rotativen Systemen wie Stachelwalzen oder Stanzwalzen erzeugen, gegebenenfalls unter Verwendung einer Gegenwalze (Vulkollanwalze), die das Gegenrad beim Schneiden bilden.

Weitere Möglichkeiten zur Perforation stellen gesteuert intermittierend arbeitende Schneidtechnologien dar wie beispielsweise die Verwendung von Lasern, Ultraschall, Hochdruckwasserstrahlen dar. etc.

Das Klebeband ist flexibel auf unterschiedlichen Kabeldurchmessern einsetzbar.

Mittels der vorteilhaften Kennzeichnung lässt sicher und einfach die fachgerechte Anwendung des Klebebands prüfen.

Das erfindungsgemäße Klebeband kann in den bekannten und üblichen Prozessen bei der der Kabelbandagierung aufgebracht werden.

Im Folgenden soll das Klebeband anhand mehrerer Figuren näher erläutert werden, ohne damit eine wie auch immer geartete Einschränkung hervorrufen zu wollen.

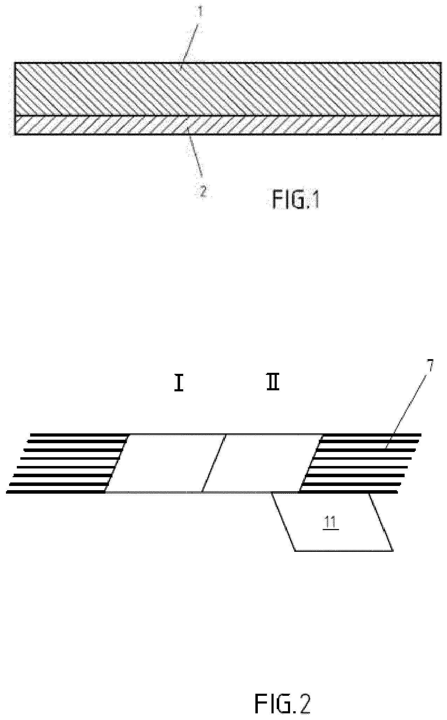

Es zeigen
- Figur 1: das Klebeband im seitlichen Schnitt,
- Figur 2: einen Ausschnitt eines Kabelbaums, der sich aus einer Bündelung von einzelnen Kabeln zusammensetzt und der mit dem erfindungsgemäßen Klebeband ummantelt ist,

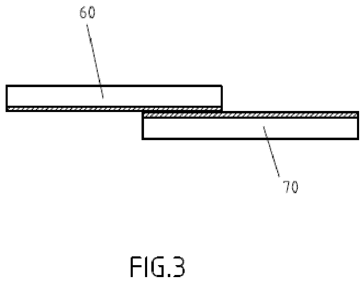

- Figur 3: eine vorteilhafte Anwendung des Klebebands.

In der Figur 1 ist im Schnitt in Querrichtung (Querschnitt) das Klebeband gezeigt, das aus einem Gewebeträger 1 besteht, auf den einseitig eine Schicht einer selbstklebenden Beschichtung 2 auf Basis einer Acrylatdispersion aufgebracht ist.

Die Klebemasse ist zu 20 % in den Träger eingesunken, was eine optimale Verankerung bewirkt und gleichzeitig die Handeinreißbarkeit des Trägers verbessert.

In der Figur 2 ist ein Ausschnitt eines Kabelbaums gezeigt, der sich aus einer Bündelung von einzelnen Kabeln 7 zusammensetzt und der mit dem erfindungsgemäßen Klebeband 11 ummantelt ist. Das Klebeband wird in einer schraubenlinienförmigen Bewegung um den Kabelbaum geführt.

Der gezeigte Ausschnitt des Kabelbaums zeigt zwei Wicklungen I und II des Klebebands. Nach links hin würden sich weitere Wicklungen erstrecken, diese sind hier nicht dargestellt.

In einer weiteren Ausführungsform für eine Ummantelung werden zwei mit einer Klebemasse ausgerüstete erfindungsgemäße Bänder 60, 70 mit ihren Klebemassen versetzt (bevorzugt um jeweils 50 %) aufeinander laminiert, so dass sich ein Produkt ergibt, wie es in Figur 3 dargestellt ist.

### Beispiele

### Skizze der Beispiele

Das Klebeband wird nachfolgend in bevorzugter Ausführung beschrieben, ohne damit die Erfindung irgendeiner Beschränkung unterwerfen zu wollen.

Des Weiteren sind Vergleichsbeispiele aufgeführt, in denen jeweils ein Klebeband dargestellt ist, das eine signifikant schlechtere Performance zeigt.

### Beispiel A

Auf einen Vliesträger wird eine acrylatbasierende Haftklebemasse aufgebracht, so dass ein Klebemassenflächengewicht von 65 g/m² resultiert.

Bei dem Vlies handelt es sich um ein Nähwirkvlies vom Typ Maliwatt mit einem Flächengewicht von 72 g/m², bestehend aus reinen PET-Fasern der Länge 64 mm und der Dicke 3,3 dtex und einem PET-Nähfaden der Stärke 50 dtex, die mit (22 Fäden pro Inch (entspricht 9 Fäden/Zentimeter Vliesbreite) vernäht sind.

Dieses vliesbasierte Klebeband kann mit dem Verfahren verarbeitet werden, es führt zur Vermeidung von Fadenausrissen und Fusselverschmutzungen beim Abrollen des Klebebandes.

### Beispiel B

Auf einem Polyamidgewebe wird eine acrylatbasierende Haftklebemasse aufgebracht, so dass ein Klebemassenflächengewicht von 100 g/m² resultiert. Das Polyamidgewebe ist aus unverdrehten Polyamid Garnen, Type Polyamid 6.6 mit 470 dtex, aufgebaut. Die Fadenanzahl beträgt 21 Fd/cm in Kettrichtung und 17 Fd/cm in Schussrichtung. Ohne gesonderte Behandlung der Schneidkanten neigt dieses Klebeband zu Kettfadenausrissen und Fusselbildung. Dieses gewebebasierte Klebeband kann mit dem Verfahren verarbeitet werden, es führt zur Vermeidung von Fadenausrissen und Fusselverschmutzungen beim Abrollen des Klebebandes.

### Beispiel C

Auf einem weiteren Polyamidgewebe wird eine acrylatbasierende Haftklebemasse aufgebracht, so dass ein Klebemassenflächengewicht von 80 g/m² resultiert. Das Polyamidgewebe besteht in Kettrichtung aus unverdrehten Polyamidgarnen, Type Polyamid 6.6 mit 270 dtex, in Schussrichtung besteht das Gewebe aus verdrehten Mischgarnen aus Polyamid 6.6 mit 270 dtex und Polyethylenterephthalat mit 167 dtex. Die Fadenanzahl beträgt 29 Fd/cm in Kettrichtung und 22 Fd/cm in Schussrichtung. Ohne gesonderte Behandlung der Schneidkanten neigt dieses Klebeband zu Kettfadenausrissen und Fusselbildung. Dieses gewebebasierte Klebeband kann mit dem Verfahren verarbeitet werden, es führt zur Vermeidung von Fadenausrissen und Fusselverschmutzungen beim Abrollen des Klebebandes.

### Beispiel D

Auf einem Polyestergewebe wird eine acrylatbasierende Haftklebemasse aufgebracht, so dass ein Klebemassenflächengewicht von 80 g/m² resultiert. Das Polyestergewebe ist aus Polyethylenterephthalatgarnen mit 167 dtex aufgebaut. Die Fadenanzahl beträgt 48 Fd/cm in Kettrichtung und 26 Fd/cm in Schussrichtung. Ohne gesonderte Behandlung der Schneidkanten neigt dieses Klebeband zu Kettfadenausrissen und Fusselbildung. Dieses gewebebasierte Klebeband kann mit dem Verfahren verarbeitet werden, es führt zur Vermeidung von Fadenausrissen und Fusselverschmutzungen beim Abrollen des Klebebandes.

### Gegenbeispiel 1

Auf einen Veloursträger wird eine acrylatbasierende Haftklebemasse aufgebracht, so dass ein Klebemassenflächengewicht von 70 /m² resultiert.

Bei dem Velours handelt es sich um eine Kettwirkware aus Polyamidgarnen, Type Polyamid 6.6, die in einen zweiten Arbeitsschritt einseitig aufgeraut wird.

Dieses velourbasierte Klebeband kann mit dem Verfahren nicht verarbeitet werden, es neigt unter Zugbelastung während des Schneidprozesses zu hohen Dehnungen und Verringerung der Streifenbreite. Die Schneidkanten können nicht sicher an den beheizten Elementen vorbeigeführt werden.

### Gegenbeispiel 2

Auf einen Aramidgewebe wird eine acrylatbasierende Haftklebemasse aufgebracht, so dass ein Klebemassenflächengewicht von 80 /m² resultiert.

Bei dem Aramidgewebe handelt es sich um ein Gewebe aus Aramidgarnen, Type para-Aramid mit 420 dtex. Die Fadenzahl beträgt 13 Fd/cm in Kett- und Schussrichtung.

Dieses aramidbasierte Klebeband kann mit dem Verfahren nicht verarbeitet werden, es kommt auch bei sehr hohen Temperaturen an den beheizten Elementen nicht zu versiegelten Kanten.

### Durchführung des Verfahrens

Aus einer Klebeband-Bahn umfassend das jeweils angegebene textile Material sowie die einseitig aufgebrachte jeweils angegebene Klebemasse gemäß der obigen Beispiele werden durch Schneiden in Abzugsrichtung der Klebeband-Bahn 54 streifenförmige Klebebänder mit jeweils zwei randseitigen Schnittkanten erzeugt.

Diese werden nach dem Schneiden dem Versiegelungswerkzeug zugeführt, das aus 55 dreieckig geformten Schienen, die Aluminiumnitrid bestehen, zugeführt.

Der Abstand der Schienen zueinander beträgt jeweils 15 mm.

Die Schienen weisen eine Oberflächentemperatur von 350 °C auf.

Die Klebebänder werden mit einer Bahngeschwindigkeit von 0,75 m/s durch das Versiegelungswerkzeug geführt, wobei die Kontaktfläche des Schnittkanten auf den Schienen eine Länge von 85 mm hat.

Nach dem Durchlaufen des Versiegelungswerkzeugs werden die Klebebandrollen zu einer archimedischen Spirale gewickelt.

| | Beispiel A | Beispiel B | Beispiel C |
|---|---|---|---|
| Beschreibung Textilträger des Klebebandes | Nähvlies PET Faser und PET Nähgarn 72 g/m2 | Polyamidgewebe aus unverdrehten Polyamid-Garnen, Konstruktion 21 × 17 Fd/cm bei 185 g/m² | Polyamid Mischgewebe mit der Konstruktion 29 × 22 Fd/cm Kette PA unverdreht und Schuss PA-PET verdrehte Garne |
| Beschreibung Klebmassebeschichtung | Acrylatklebemasse mit 65 g/m² | Acrylatklebemasse mit 100 g/m² | Acrylatklebemasse mit 80 g/m² |
| Flächengewicht des Klebebandes | 137 g /m² | 285 g/m² | 265 g/m² |
| Breite des Klebbandes nach dem Schneiden | 19 mm | 19 mm | 19 mm |
| Dicke des Klebebandes | 270 µm | 380 µm | 370 µm |
| Klebkraft nach DIN EN ISO 29862 auf Stahl | 2,6 N/cm | 3,1 N/cm | 2,8 N/cm |
| Abrieb nach VW 60360-1 2022-07, RT, einlagig | 158 Hübe | 9502 Hübe | 8365 Hübe |
| Dämpfung nach VW 60360-1 2022-07 | 5,5 db(A) | 1,8 db(A) | 1,8 db(A) |
| Temperatur der beheizten Schiene | 300 °C | 350 °C | 350 °C |
| Breite des Klebebandes nach der beheizten Schiene | 18,5 mm | 19 mm | 19 mm |
| Fadenausriss beim Abrollen der Klebebandrolle | nicht vorhanden | Nicht vorhanden | Nicht vorhanden |
| Faser- und Fusselverschmutzung | nicht vorhanden | Nicht vorhanden | Nicht vorhanden |
| Beurteilung | Verfahren anwendbar | Verfahren anwendbar | Verfahren anwendbar |
| | | | |

| | Beispiel D | Gegenbeispiel 1 | Gegenbeispiel 2 |
|---|---|---|---|
| Beschreibung Textilträger des Klebebandes | PET Gewebe, Konstruktion 48 × 26 Fd/cm bei 130 g/m² | Polyamid Kettwirkwarenvelour einseitig geraut mit 170 g/m² | para-Aramid Gewebe, Konstruktion 13 × 13 Fd/cm mit 110 g/m² |
| Beschreibung Klebmassebeschichtung | Acrylatklebemasse mit 80 g/m² | Acrylatklebemasse mit 70 g/m² | Acrylatklebemasse mit 80 g/m² |
| Flächengewicht des Klebebandes | 210 g /m² | 240 g /m² | 190 g /m² |
| Breite des Klebbandes nach dem Schneiden | 19 mm | 19 mm | 19 mm |
| Dicke des Klebebandes | 260 µm | 980 µm | 250 µm |
| Klebkraft nach DIN EN ISO 29862 auf Stahl | 2,6 N/cm | 3,4 N/cm | 2,5 N/cm |
| Abrieb nach VW 60360-1 2022-07, RT, einlagig | 1923 Hübe | 2894 Hübe | 6955 Hübe |
| Dämpfung nach VW 60360-1 2022-07 | 1,6 db(A) | 18 db(A) | 1,2 db(A) |
| Temperatur der beheizten Schiene | 330 °C | 380 °C | 400 °C |
| Breite des Klebebandes nach der beheizten Schiene | 19 mm | 16 mm | 19 mm |
| Fadenausriss beim Abrollen der Klebebandrolle | nicht vorhanden | nicht vorhanden | vorhanden |
| Faser- und Fusselverschmutzung | nicht vorhanden | vorhanden | vorhanden |
| Beurteilung | Verfahren anwendbar | Verfahren nicht anwendbar, Klebebandbreite variiert zu stark | Verfahren nicht anwendbar, es kommt zu keinem Verschmelzen der Kanten |

Im Vergleich zu den bekannten Verfahren hat das erfindungsgemäße Verfahren folgende Vorteile:
- Die Schienen des Versiegelungswerkzeugs können entsprechend der Prozessgeschwindigkeit eingefahren werden.
- Das Schneiden und die Versiegelung sind voneinander getrennt, aber inline einsetzbar, beide Schritte können getrennt optimal ausgelegt werden.
- Die Versiegelungstemperatur kann dem den textilen Träger bildenden Thermoplasten angepasst werden.
- Mischgewebe und Mischgarne mit unterschiedlichem Schmelzbereichen lassen sich einheitlich versiegeln.
- Der notwendige Energieeintrag kann geschwindigkeitsanhängig eingebracht werden, auch für hohe Prozessgeschwindigkeiten geeignet.

### Durchführung der Tests

Die Messungen werden - soweit nicht ausdrücklich anders erwähnt - bei einem Prüfklima von 23 ± 1 °C und 50 ± 5 % rel. Luftfeuchte durchgeführt.

Die Prüfung und Klassifizierung von Klebebändern für die Kabelummantelung erfolgt nach umfangreichen Normenwerken wie zum Beispiel der VW 60360-1 "Schutzsysteme für Leitungssätze in Kraftfahrzeugen; Klebebänder; Prüfrichtlinie" (2022-07).

### Abriebbeständigkeit

Die Abriebbeständigkeit eines Klebebandes wird nach der genannten Prüfungsrichtlinie anhand eines definierten Prüfverfahrens bestimmt. Die Klassifizierung der Klebebänder hinsichtlich ihrer Abriebbeständigkeit wird bei einem Dorndurchmesser von 5 mm in der Tabelle 1 wiedergegeben.

**Tabelle 1: Klassifizierung Abriebbeständigkeit Klebbänder nach VW 60360-1**

| **Abriebklasse einlagig bei RT** | **Klassifizierung der Schutzklasse** | **Anforderung** |
|---|---|---|
| A-1L | A kein Abriebschutz | < 100 Hübe |
| B-1L | B sehr geringer Abriebschutz | 100 - 499 Hübe |
| C-1L | C geringer Abriebschutz | 500 - 999 Hübe |
| D-1L | D mittlerer Abriebschutz | 1000 - 4999 Hübe |
| E-1L | E hoher Abriebschutz | 5000 -14999 Hübe |
| F-1L | F sehr hoher Abriebschutz | 15000 - 29999 Hübe |
| G-1L | G extremer Abriebschutz | 30000 - 59999 Hübe |
| H-1L | H extrem hoher Abriebschutz | ≥ 60000 |

Der Prüfling mit einer Länge von 10 cm wird auf einen 5 mm dicken Stahldorn einlagig in Längsrichtung des zu prüfenden Produktes aufgelegt, bei nicht vollflächig gleichartigem Klebbandaufbau wird der Teil auf Abrieb getestet, der die Schutzfunktion in der Anwendung darstellt. Als Abriebwerkzeug dient ein Stahldraht mit 0,45 mm Durchmesser, der unter einer Gewichtsbelastung von 7 N mittig über den Prüfling reibt. Als Maßzahl für die Abriebeigenschaften wird die Anzahl der Doppelhübe bestimmt, bis der Prüfling zerstört ist. Durch die Messung der Abriebfestigkeit kann die Beständigkeit gegenüber schärferen Gegenständen wie zum Beispiel einer Metallkante in der Anwendung simuliert werden. Zusätzlich kann die Abriebprüfung mit mehreren Klebebandlagen und/oder bei erhöhter Temperatur (90 °C) durchgeführt werden.

Das Verfahren der Abriebmessung ist in der Figur 17 gezeigt.

### Geräuschdämpfung

Die Geräuschdämpfung eines Klebebandes wird anhand eines definierten Prüfaufbaus und Prüfverfahrens nach der VW-Spezifikation bestimmt.

Bei der VW-Spezifikation wird ein Stahlstab, einseitig drehbar gelagert, trifft auf ein gebogen aufgestelltes Aluminiumblech und erzeugt dabei ein Geräusch. Der Unterschied im Geräuschereignis zwischen dem Stahlstab und dem mit Schutzhülle bewickeltem Stahlstab beschreibt den Grad der Geräuschdämpfung, die ein Schutzschlauch oder Klebeband erreichen kann.

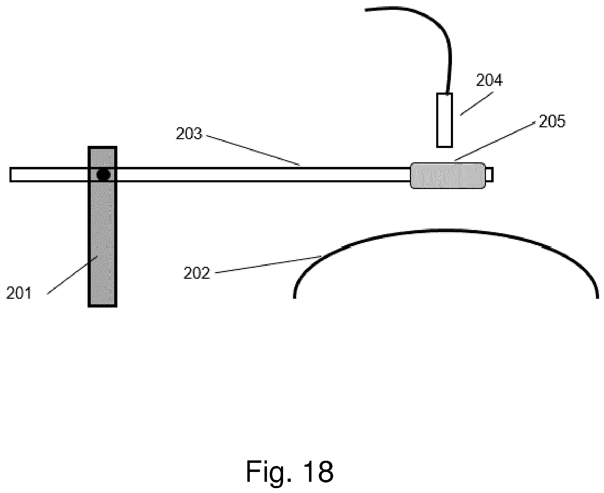

Im Folgenden wird in Verbindung mit der Figur 18 das Messverfahren zur Geräuschdämpfung ausführlich dargelegt.

Bei dieser Messmethode wird ein definierter Stahlstab 203 (Durchmesser 8 mm, Hebellänge von 220 mm) mit einem Prüfling 205 - sprich Klebeband - versehen und mit einer Kraft von 0,16 N aus einer Höhe von 20 mm, ausgelöst aus der Arretierung 205, auf ein Aluminiumblech 204 fallen gelassen. Das Aluminiumblech hat im unverformten Zustand die Masse 350 × 190 × 0,3 [mm] und wird halbtonnenförmig unter dem Prüfling 205 angeordnet, so dass sich eine Weite von 290 mm ergibt. Das entstehende Geräusch wird mit einem sich 50 mm über der Aufschlagstelle befindlichen Mikrophon 204 und eines handelsüblichen Schallmessgerät, beispielsweise Typ 2239 der Firma Bruel & Kjaer, in Form des Schalldruckpegels (Lsp) mit der Frequenzbewertung A (Frequenzbereich von beispielsweise 20 bis 12.500 Hz) und der Zeitbewertung S (Slow) erfasst.

Die Dämpfung wird als Differenz zwischen Nullwert mit nicht-umwickeltem Stahlstab sowie dem jeweiligen Messwert des Prüflings in dB(A) angegeben.

**Tabelle 2: Klassifizierung der Geräuschdämpfung nach VW 60360-1**

| **GeräuschDämpfungsklasse einlagig** | **Geräuschdämpfungsklasse nach VW-Spezifikation** | **Messwert der Geräuschdämpfung** |
|---|---|---|
| A-1L | A keine Geräuschdämpfung | 0 bis ≤ 2 dB(A) |
| B-1L | B sehr geringe Geräuschdämpfung | > 2 bis ≤ 5 dB(A) |
| C-1L | C geringe Geräuschdämpfung | > 5 bis ≤ 10 dB(A) |
| D-1L | D mittlere Geräuschdämpfung | > 10 bis ≤ 15 dB(A) |
| E-1L | E hohe Geräuschdämpfung | > 15 bis ≤ 20 dB(A) |
| F-1L | F sehr hohe Geräuschdämpfung | > 20 dB(A) |

## Patentansprüche

1. Verfahren zum Konfektionieren von textilen Klebebändern, insbesondere Klebebändern zum Umwickeln von Kabeln, wobei aus einer Klebeband-Bahn umfassend ein textiles Material, das gewählt wird aus der Gruppe Gelege, Geflechte, Nadelflortextilien, Filze, Gewebe oder Vliese und auf das zumindest einseitig eine Klebebeschichtung, vorzugsweise Haftklebemasse aufgebracht ist, durch Schneiden in Abzugsrichtung der Bahn aus dieser mehrere streifenförmige Klebebänder mit jeweils zwei randseitigen Schnittkanten erzeugt werden,
**dadurch gekennzeichnet, dass**
zumindest eine der Schnittkante der Klebebänder nach dem Schneiden mittels eines Versiegelungswerkzeug thermisch so weit erhitzt werden, dass die das Textil bildenden Fasern und/oder Filamente zumindest partiell aufgeschmolzen wird, so dass sich Verknüpfungspunkte zwischen den Fasern und/oder Filamenten ausbilden, wobei das zur Bildung der Fasern und/oder Filamente eingesetzte Material zu mindestens 50 Gew.-% aus Polyester, vorzugsweise Polyethylenterephthalat, aus Polyamid, aus Polyolefin, aus Polyphthalamid oder aus PVC besteht.

2. Verfahren nach Anspruch 1,
**dadurch gekennzeichnet, dass**
beide Schnittkanten der Klebebänder nach dem Schneiden mittels eines Versiegelungswerkzeug thermisch so weit erhitzt werden, dass die das Textil bildenden Fasern und/oder Filamente zumindest partiell aufgeschmolzen werden, so dass sich Verknüpfungspunkte zwischen den Fasern und/oder Filamenten ausbilden.

3. Verfahren nach Anspruch 1 oder 2,
**dadurch gekennzeichnet, dass**
das Versiegelungswerkzeug eine erwärmbare Schiene umfasst, die in Kontakt mit einer der beiden Schnittkanten steht.

4. Verfahren nach Anspruch 1 oder 2,
**dadurch gekennzeichnet, dass**
das Versiegelungswerkzeug zwei erwärmbare Schienen aufweist, die in Kontakt mit beiden Schnittkanten stehen.

5. Verfahren nach Anspruch 4,
**dadurch gekennzeichnet, dass**
das Versiegelungswerkzeug zwei parallel angeordnete Schienen aufweist, deren Abstand zueinander geringer als die Breite des Klebebandes ist, vorzugsweise beträgt die Differenz zwischen 1 bis 4 mm.

6. Verfahren nach Anspruch 5,
**dadurch gekennzeichnet, dass**
das Klebeband zwischen den Schienen die Form eines Bogens annimmt, wobei bei einseitig beschichteten Klebebändern der textile Träger den Außenbogen und die Klebemasse den Innenbogen bildet.

7. Verfahren nach zumindest einem der vorherigen Ansprüche,
**dadurch gekennzeichnet, dass**
die die Versiegelung beeinflussenden Faktoren insbesondere bei Änderungen der Bahngeschwindigkeit so aufeinander abgestimmt werden, dass ein gleichbleibender Energieeintrag auf die Schneidkanten erfolgt.

8. Verfahren nach zumindest einem der vorherigen Ansprüche,
**dadurch gekennzeichnet, dass**
die Fasern und/oder Filamente derart aufgeschmolzen werden, dass sich Verknüpfungspunkte zwischen allen Fasern und/oder Filamenten ausbilden.

9. Verfahren nach zumindest einem der vorherigen Ansprüche,
**dadurch gekennzeichnet, dass**
als Material für die Schiene vorzugsweise eine Keramik wie Aluminiumnitrid, ein Verbundwerkstoff, ein Eisen- oder Nichteisenmetall wie Stahl, Aluminium, Bronze, Kupfer gewählt wird.

10. Verfahren nach zumindest einem der vorherigen Ansprüche,
**dadurch gekennzeichnet, dass**
die Fasern und/oder Filamente des textilen Trägermaterials Polyamid oder Polyester wie Polyethylenterephthalat enthalten, vorzugsweise jeweils daraus bestehen.

11. Verfahren nach zumindest einem der vorherigen Ansprüche,
**dadurch gekennzeichnet, dass**
die Klebebeschichtung aus einem Acrylat-Kleber oder einem Synthesekautschuk-Kleber besteht.

12. Klebeband, insbesondere Kabelwickelband, das vorzugsweise hergestellt ist in einem Verfahren nach zumindest einem der vorherigen Ansprüche, wobei dieses Klebeband einen textilen Träger und eine einseitige Klebebeschichtung umfasst sowie zwei randseitige Schnittkanten, die verschmolzen sowie fussel- und fadenfrei sind.

13. Klebeband nach Anspruch 12,
**dadurch gekennzeichnet, dass**
der Winkel der Fase bezogen auf die gerade Schnittkante zwischen 20° und 75° liegt.

14. Verwendung eines Klebebandes nach Anspruch 12 oder 13 zum Ummanteln von langgestrecktem Gut, wobei das Klebeband in einer Schraubenlinie um das langgestreckte Gut geführt wird oder wobei das langgestreckte Gut in axialer Richtung von dem Band umhüllt wird.

15. Langgestrecktes Gut, wie insbesondere ein Kabelsatz, ummantelt mit einem Klebeband nach Anspruch 12 oder 13.

16. Fahrzeug, enthaltend ummanteltes langgestrecktes Gut nach Anspruch 15.
